# EUROPEAN PATENT SPECIFICATION

(11) **EP 0 558 078 B1**
(45) Date of publication and mention of the grant of the patent: **15.01.1997**
(21) Application number: 93103144.7
(22) Date of filing: 26.02.1993
(51) Int. Cl.: B41M 5/30

(54) **Thermal recording system**
Wärmeempfindliches Aufzeichnungssystem
Système d'enregistrement thermosensible

(30) Priority: 27.02.1992 JP 41730/92; 13.11.1992 JP 304088/92
(43) Date of publication of application: 01.09.1993
(73) Proprietor: FUJI PHOTO FILM CO., LTD., Kanagawa-ken, 250-01 (JP)
(72) Inventor: Goto, Yasuhiko, c/o Fuji Photo Film Co., Ltd., Ashigarakami-gun, Kanagawa-ken 258 (JP); Noguchi, Masaru, c/o Fuji Photo Film Co., Ltd., Ashigarakami-gun, Kanagawa-ken 258 (JP); Horikawa, Kazuo, c/o Fuji Photo Film Co., Ltd., Ashigarakami-gun, Kanagawa-ken 258 (JP); Agano, Toshitaka, c/o Fuji Photo Film Co., Ltd., Ashigarakami-gun, Kanagawa-ken 258 (JP); Imai, Shinji, c/o Fuji Photo Film Co., Ltd., Ashigarakami-gun, Kanagawa-ken 258 (JP); Sawano, Mitsuru, c/o Fuji Photo Film Co., Ltd., Shizuoka-ken 418 (JP)
(74) Representative: Klunker . Schmitt-Nilson . Hirsch

(56) References cited:
- PATENT ABSTRACTS OF JAPAN vol. 4, no. 99 (M-21)16 July 1980 & JP-A-55 057 494 ( RICOH K.K. ) 28 April 1980
- PATENT ABSTRACTS OF JAPAN vol. 3, no. 82 (E-123)14 July 1979 & JP-A-54 061 543 ( CANON INCORPORATED ) 17 May 1979
- PATENT ABSTRACTS OF JAPAN vol. 13, no. 193 (M-822)(3541) 9 May 1989 & JP-A-01 018 685 ( FUJI PHOTO FILM COMPANY LIMITED ) 23 January 1989
- IBM TECHNICAL DISCLOSURE BULLETIN vol. 1, no. 6, April 1959, ARMONK, NEW YORK, U.S.A. page 4 M.P.PRATER 'SUPERTHRESHOLD IMPACT HEAT PRINTING'

## Description

The present invention relates to a thermal recording system according to the pre-characterizing part of claim 1.

A thermal recording system is widespread which applies heat energy to a heat- or thermo-sensitive recording medium so as to record an image or the like thereon. In particular, a thermal recording system capable of recording an image at a high speed by using a laser as a heat source has been proposed (see Japanese Patent Application Laid-Open Publication Nos. 50-23617, 58-94494, 62-77983 and 62-78964, as examples).

As a thermo-sensitive recording material or medium applicable to such a thermal recording system and capable of recording satisfactory images in high quality, the present applicant has developed a medium which has leuco dyes, a developer and light-absorbing dyes all provided on a support and produces or develops color at a density corresponding to the energy of applied heat (see Japanese Patent Application Nos. 3-62684 and 3-187494, for example).

This type of thermo-sensitive recording medium has a thermo-sensitive layer formed on a support by dissolving a microcapsule containing at least leuco dyes, a developer and light- absorbing dyes in an organic solvent insoluble or soluble in water and thereafter applying a coating liquid containing particles emulsified and dispersed therein on the resultant product.

The leuco dyes have the properties for donating electrons or accepting protons such as protonic acids so as to give rise to color. The leuco dyes are normally substantially colorless and have partial skeletons such as lactone, lactam, sultone, spiropyran, ester, amide, etc. Compounds held in contact with the developer so as to allow these partial skeletons to open the ring or produce cleavage are used as the leuco dyes. Specific examples of the compounds may include crystal violet lactone, benzoyl leucomethylene blue, malachite green lactone, rhodamine B lactam, 1,3,3-trimethyl-6'-ethyl-8'-butoxyindolinobenzospiropyran, etc.

As the developers corresponding to these leuco dyes, may be mentioned acidic substances such as phenolic compounds, organic acids or metallic salts containing the same, oxybenzoate ester, etc. The developers preferably have a melting point range of from 50°C to 250°C. Particularly preferred is phenol or an organic acid insoluble in water having a melting point range of from 60°C to 200°C. Specific examples of the developers have been described in Japanese Patent Application Laid-Open Publication No. 61-291183, for example.

Preferred as the light-absorbing dyes are those which absorb less light in the visible range and are particularly excellent in the rate of absorption of wavelengths of radiation in the infrared region. Examples of the dyes may include cyanine dyes, phthalocyanine dyes, pyrylium and thiopyrylium dyes, azulenium dyes, squarylium dyes, metal complex dyes containing Ni, Cr, etc., naphthoquinone and anthraquinone dyes, indophenol dyes, indoaniline dyes, triphenylmethane dyes, triallylmethane dyes, aminium and diimmonium dyes, nitroso compounds, etc. Of these, those in which the absorption rate of light in the near infrared region, (with a wavelength range of from 700nm to 900nm) is high, are particularly preferred in view of the fact that a semiconductor laser for generating near infrared light has been put to practical use.

Since, on the other hand, the thermo-sensitive recording medium referred to above is kept in a stable conserved state, it does not develop color when the heat energy is low in level. Accordingly, a substantial quantity of heat energy is required to obtain a desired color-developed state. As a result, the dynamic range becomes narrow by a threshold value corresponding to the heat energy required to produce or develop the color and hence difficulties arise in the production of a high-tonal image. Further, a load imposed on the thermal recording system for developing the color greatly increases.

JP-A-55/57 494 and JP-A-54/61543 each disclose a thermal recording system according to the pre-characterizing part of claim 1.

It is an object of the present invention to provide a thermal recording system wherein the dynamic range of a laser beam used for recording an image or the like can be sufficiently ensured to thereby obtain an image in high gradation and with high accuracy and any load imposed on a heating-beam generating means for generating the laser beam can be reduced, thereby making it possible to simplify the system and reduce its cost.

To achieve the above object, there is provided a thermal recording system having the features of claim 1.

In the thermal recording system according to the present invention, the leuco dyes, the developer and the light-absorbing dyes are contained in microcapsules on the support.

Further, the thermo-sensitive recording medium, which develops the color at the density corresponding to the applied heat energy, is preheated to the temperature near but less than the color-developing temperature. In this condition, desired color-development can be effected by scanning the thermo-sensitive recording medium with the laser beam emitted from the heating-beam generating means.

Here, the preheat temperature is detected and controlled so as to reach a desired temperature. As a result, the heating for the color development can be efficiently and accurately effected.

Further, a desired preheat temperature can be obtained by detecting the density of a preheat-type color-developing portion of the thermo-sensitive recording medium and setting the detected density to a predetermined density under temperature control.

The above and other objects, features and advantages of the present invention will become apparent from the following description and the appended claims, taken in conjunction with the accompanying drawings in which preferred embodiments of the present invention are shown by way of illustrative example.

### BRIEF DESCRIPTION OF THE DRAWINGS

FIG. 1 is a schematic view showing the structure of a thermal recording system according to one embodiment of the present invention;
FIG. 2 is a view for describing one example of a thermo-sensitive recording medium and a preheating means both shown in FIG. 1;
FIG. 3 is a view for describing a color development characteristic of the thermo-sensitive recording medium depicted in FIG. 2;
FIG. 4 is a view for describing another example of a thermo-sensitive recording medium and a preheating means;
FIG. 5 is a view for describing a further example of a thermo-sensitive recording medium and a preheating means;
FIGS. 6A, 6B and 6C are views for describing still further examples of preheating means respectively;
FIG. 7 is a view for describing a still further example of a preheating means;
FIG. 8 is a view for describing a still further example of a thermo-sensitive recording medium and a preheating means;
FIG. 9 is a view for describing a still further example of a preheating means;
FIGS. 10A and 10B are views for describing still further examples of preheating means respectively;
FIG. 11 is a schematic view illustrating the structure of a thermal recording system according to another embodiment of the present invention;
FIG. 12 is a schematic view depicting the structure of a thermal recording system according to a further embodiment of the present invention;
FIG. 13 is a view for describing a still further example of a preheating means;
FIG. 14 is a view for describing a still further example of a preheating means;
FIG. 15 is a schematic view showing the structure of a thermal recording system according to a still further embodiment of the present invention;
FIG. 16 is a view for describing a thermo-sensitive recording medium and a preheating means both shown in FIG. 15;
FIG. 17 is a view for describing the structure of another example of a thermo-sensitive recording medium;
FIG. 18 is a view for describing a still further example of a preheating means;
FIG. 19 is a view for describing a still further example of a preheating means;
FIG. 20 is a view for describing preheat temperature characteristics obtained in the examples shown in FIGS. 18 and 19;
FIG. 21 is a schematic view showing the structure of a thermal recording system according to a still further embodiment of the present invention;
FIG. 22 is a view for describing a still further example of a preheating means;
FIG. 23 is a schematic view illustrating the structure of a thermal recording system according to a still further embodiment of the present invention;
FIG. 24 is a schematic view depicting the structure of a thermal recording system according to a still further embodiment of the present invention;
FIG. 25 is a schematic view illustrating the structure of a thermal recording system according to a still further embodiment of the present invention;
FIG. 26 is a view for describing the structure of another example of a thermo-sensitive recording medium employed in the thermal recording system shown in FIG. 25;
FIG. 27 is a view for describing the distribution of heat energy applied to the thermo-sensitive recording medium shown in FIG. 26;
FIG. 28 is a schematic view showing the structure of a thermal recording system according to a still further embodiment of the present invention;
FIG. 29 is a schematic view illustrating the structure of a thermal recording system according to a still further embodiment of the present invention;
FIG. 30 is a view for describing a still further example of a preheating means;
FIG. 31 is a view for describing a still further example of a preheating means;
FIG. 32 is a schematic view depicting the structure of a thermal recording system according to a still further embodiment of the present invention;
FIG. 33 is a view for describing the thermal recording system shown in FIG. 32;
FIG. 34 is a schematic view showing the structure of a thermal recording system according to a still further embodiment of the present invention;
FIG. 35 is a view for describing the structure of another example of a scanning unit employed in the thermal recording system shown in FIG. 34; and
FIG. 36 is a schematic view illustrating the structure of a thermal recording system according to a still further embodiment of the present invention.

### DETAILED DESCRIPTION OF THE PREFERRED EMBODIMENTS

Thermal recording apparatuses according to the present invention will hereinafter be described in detail with reference to the accompanying drawings in which preferred embodiments are shown by way of illustrative example. Incidentally, in each of the following embodiments, a heating-beam generating means is controlled so as to record an image on a thermo-sensitive recording medium in multitonal form.

### (First Embodiment)

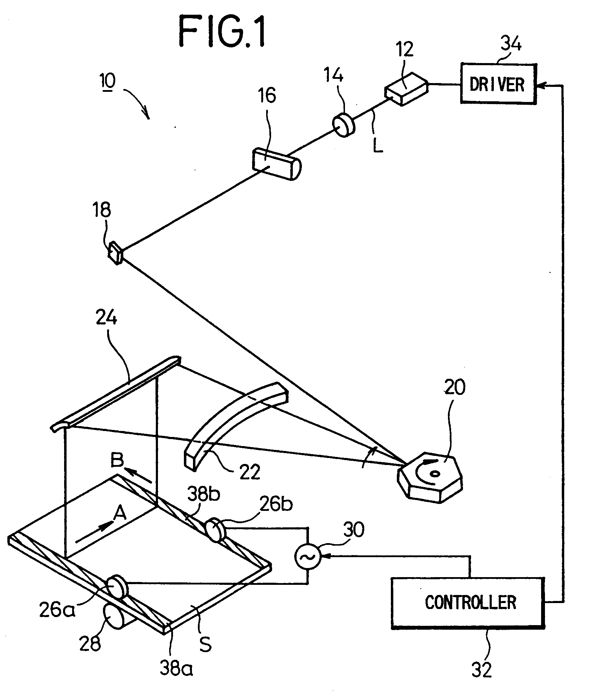

A thermal recording system 10 shown in FIG. 1 causes a heat- or thermo-sensitive recording medium S fed for auxiliary scanning in the direction indicated by the arrow B to be scanned with a laser beam L in the direction indicated by the arrow A, and records the scanned images on the thermo-sensitive recording medium S. Further, the thermal recording system 10 comprises a laser diode 12 for producing the laser beam L, a collimator lens 14 for making the laser beam L parallel as a bundle of light rays, a cylindrical lens 16, a reflection mirror 18, a polygon mirror 20 for reflecting the laser beam L, an fθ lens 22, a cylindrical mirror 24 for correcting a plane inclination or trip of the polygon mirror 20 in cooperation with the cylindrical lens 16, electrode rollers 26a, 26b brought into contact with both sides of the thermo-sensitive recording medium S, a support roller 28 disposed in opposing relationship to the electrode rollers 26a, 26b, and a power source 30 for supplying current to the electrode rollers 26a, 26b. Incidentally, the power source 30 is controlled by a controller 32 and the laser diode 12 is controlled by the controller 32 through a driver 34.

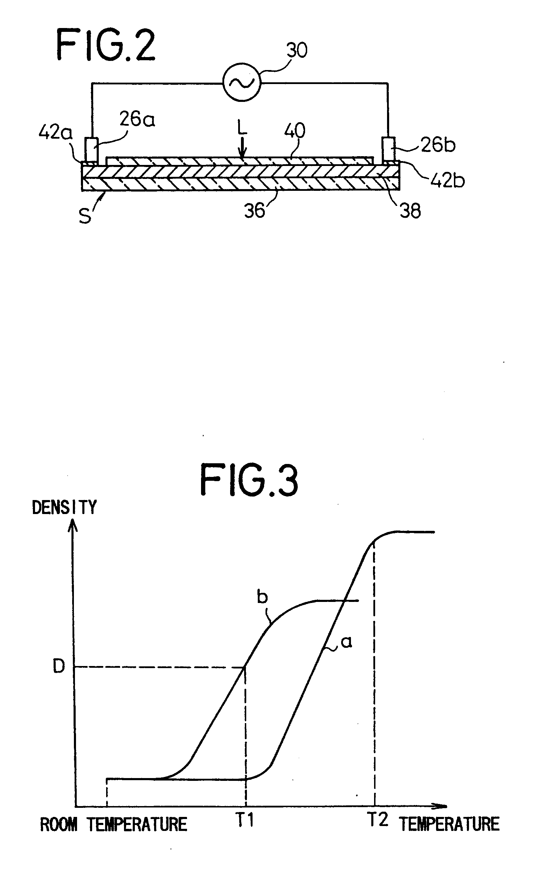

As shown in FIG. 2, the thermo-sensitive recording medium S has a conductive resistance heating or heat generating layer 38 formed on a support 36 and a thermo-sensitive layer 40 fabricated on the resistance heat generating layer 38. Further, the thermo-sensitive recording medium S has electrode layers 42a, 42b formed on the resistance heat generating layer 38 and provided on both sides of the thermo-sensitive layer 40. Incidentally, a flexible and panel-shaped resistance heating or heat generating material such as an In-Sn oxide layer or a rubber heater can be used as the resistance heat generating layer 38. The thermo-sensitive layer 40 is made up of a material containing leuco dyes, a developer and light-absorbing dyes for absorbing the laser beam L and converting the absorbed laser beam L into the heat energy. Material, described in Japanese Patent Application Nos. 3-62684 and 3-187494, for example, as described above, can be used.

Incidentally, the laser diode 12 forms a heating-beam generating means, and the power source 30 and the electrode rollers 26a, 26b constitute a current supply circuit.

The thermal recording system 10 according to the present embodiment is basically constructed as described above. Operations and effects of the thermal recording system 10 will next be described.

The controller 32 drives the power source 30 so as to preheat the thermo-sensitive recording medium S while being fed for the auxiliary scanning in the direction indicated by the arrow B with the thermo-sensitive recording medium S interposed between the support roller 28 and the electrode rollers 26a, 26b. That is, when the resistance heat generating layer 38 is brought into contact with the electrode layers 42a, 42b of the thermo-sensitive recording medium S, the current is supplied to the resistance heat generating layer 38. As a result, the thermo-sensitive recording medium S is preheated up to the temperature immediately before the color development. A characteristic curve a shown in FIG. 3 represents a relationship between the temperature and the density of the thermo-sensitive recording medium S. In the characteristic curve a referred to above, the thermo-sensitive recording medium S is preheated to a temperature of T1.

Next, the controller 32 causes the driver 34 to activate the laser diode 12. The laser diode 12 generates a laser beam L modulated according to the tone or gradation of an image recorded on the thermo-sensitive recording medium S. The laser beam L is made parallel as a bundle of light rays by the collimator lens 14 and thereafter directed to the polygon mirror 20 through the cylindrical lens 16 and by the reflection mirror 18. The polygon mirror 20 is being rotated at a high speed. Hence, the laser beam L reflected from a reflection surface of the polygon mirror 20 is introduced into the thermo-sensitive recording medium S through the fθ lens 22 and the cylindrical lens 16. Further, the thermo-sensitive recording medium S, which is fed for the auxiliary scanning in the direction indicated by the arrow B, is scanned for main scanning along the direction indicated by the arrow A with the laser beam L. In this case, predetermined heat energy is applied to the thermo-sensitive layer 40 of the thermo-sensitive recording medium S by the laser beam L, so that a tonal image is recorded on the thermo-sensitive recording medium S.

The thermo-sensitive recording medium S has been already preheated to the temperature of T1 shown in FIG. 3 by the energy of heat generated in the resistance heat generating layer 38. It is therefore unnecessary to control the laser diode 12 in a wide temperature range from the room temperature, at which the thermal recording system 10 is disposed, to a temperature of T2. Accordingly, the laser diode 12 is controlled in the temperature range between the temperatures T1 and T2 and an image of high tone or gradation is formed with high accuracy. Further, the laser diode 12 is not required to produce a higher output. Therefore, the overall structure of the thermal recording system 10 is simplified and reduced in cost.

Good results can be obtained when setting the temperature T1 between 40°C and 275°C according to the actual leuco characteristics of the thermo-sensitive recording medium S, and when the preheating period is 30 seconds or less. It is more preferable to get the temperature T1 between 70°C and 150°C and the preheating period shorter than 10 sec., because the glass transition temperature of the microcapsule is between 70°C and 150°C and a shorter preheating period results in less fogging.

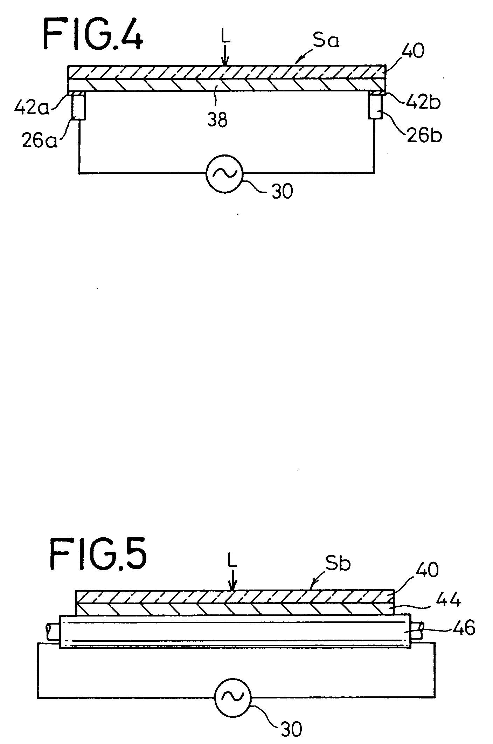

As shown in FIG. 4, as an alternative to the thermo-sensitive recording medium S, a thermo-sensitive recording medium Sa may be used in which a resistance heat generating layer 38 combined with the support 36 (see FIG. 2) of the thermo-sensitive recording medium S is used and the supply of current is effected from the side opposite to the surface radiated with the laser beam L. In a manner similar to the structure shown in FIG. 2, electrode layers 42a, 42b may be disposed on the thermo-sensitive layer 40 side, and the current may be supplied from the surface of the thermo-sensitive recording medium Sa, irradiated with the laser beam L. Needless to say, the current may be supplied from both surfaces.

### (Second Embodiment)

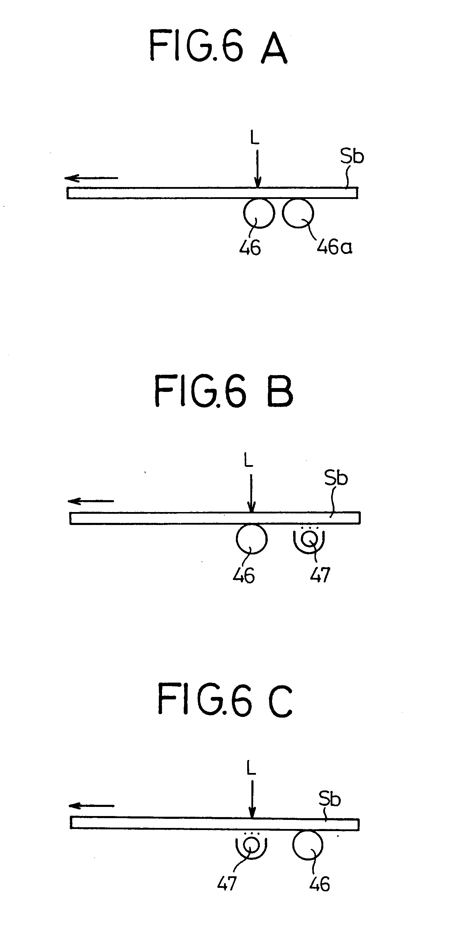

FIG. 5 shows a structure of another embodiment of a type wherein a heat roller 46 heated with the current supplied from a power source 30, is held against the surface opposite to the surface irradiated with a laser beam L, of a thermo-sensitive recording medium Sb which does not include each of the resistance heat generating layers 38 of the thermo-sensitive recording mediums S, Sa shown in FIGS. 2 and 4, thereby preheating the thermo-sensitive recording medium Sb. In this case, the thermo-sensitive recording medium Sb is not required to provide the resistance heat generating layer 38. Further, the electrode layers 42a, 42b are made unnecessary, thereby simplifying the overall structure of the thermo-sensitive recording medium Sb.

If a thermo-sensitive recording medium Sb is constructed so as to be preheated by a plurality of heat rollers 46, 46a as shown in FIG. 6A, then a preheat temperature of the thermo-sensitive recording medium Sb can be set up more stably and with high accuracy. That is, when the thermal capacity of the heat roller 46 is low under the structure shown in FIG. 5, the heat is absorbed by the thermo-sensitive recording medium Sb. As a result, the preheat temperature tends to vary. Thus, as shown in FIG. 6A, the thermo-sensitive recording medium Sb is preheated by the heat rollers 46a and thereafter set to a predetermined preheat temperature by the heat rollers 46. As a result, the preheat temperature can be maintained at the exact temperature. Similarly, the same effect as that obtained from the structure shown in FIG. 6A can be obtained even when a preheating light source 47 is provided at the stage prior to heat rollers 46 and a thermo-sensitive recording medium Sb is preheated before the preheating of the heat rollers 46 as shown in FIG. 6B. Further, if radiation heating is effected by a preheating light source 47 after a thermo-sensitive recording medium Sb has been preheated by a heat roller 46 as shown in FIG. 6C, the same effects can be obtained. If most of the heat for preheating the recording medium Sb is given by the preheating light source 47 provided at the stage prior to the heat rollers 46, the load imposed on the post-stage preheating light source 47 can be reduced. As a result, the preheating can be effected with higher accuracy. Obviously, variations of the above may be advantageously employed, involving a plurality of heat generating means in contact with medium Sb and of heat generating means not in contact with medium Sb.

### (Third Embodiment)

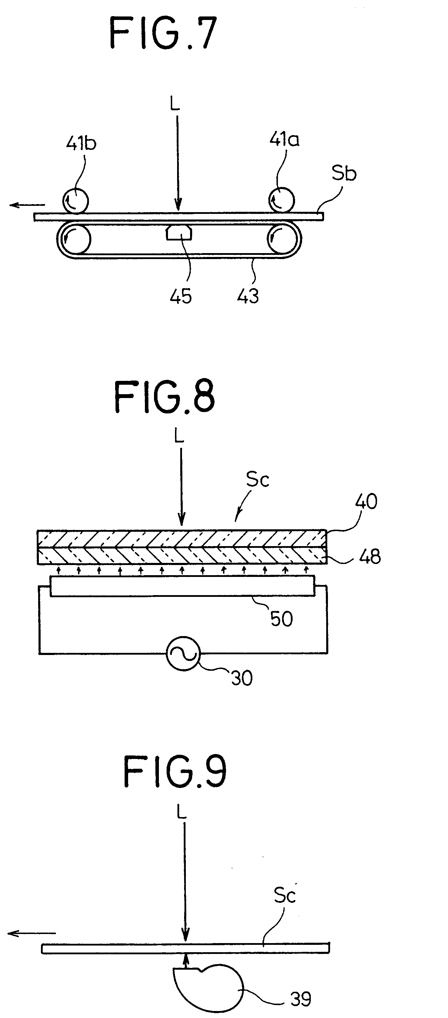

FIG. 7 shows a structure of a further embodiment of a type wherein a thermo-sensitive recording medium Sb is held and fed by pairs of nip rollers 41a, 41b on which a thin-wall belt 43 having low thermal conductivity is wound and the thermo-sensitive recording medium Sb is then preheated by a heater 45 using the thin-wall belt 43. Since, in this case, only a necessary portion of the thermo-sensitive recording medium Sb is preheated by the thin-wall belt 43 having the low thermal conductivity, the preheat temperature can be easily and accurately controlled. Further, since the heater 45 is surrounded by the thin-wall belt 43, it is possible to cause convective air generated by preheating to escape from the sides of the thermo-sensitive recording medium Sb. Moreover, the thermo-sensitive recording medium Sb is not liable to cause flaws or the like because it does not make direct contact with the heater 45.

### (Fourth Embodiment)

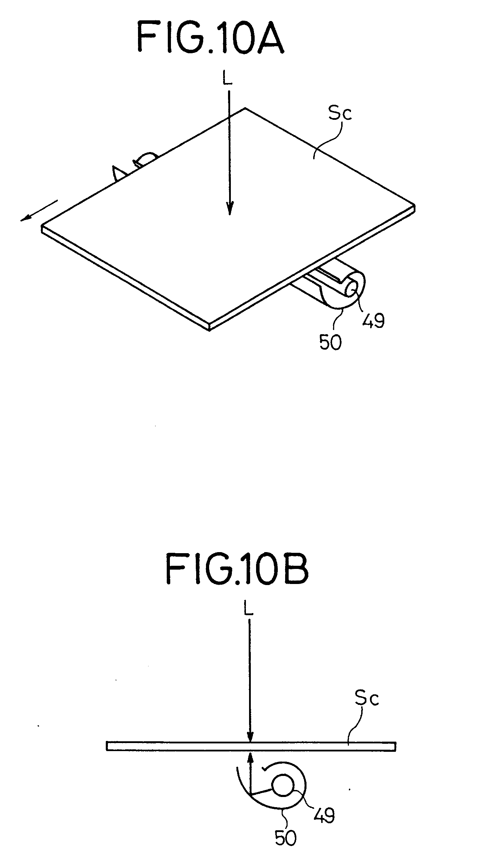

FIG. 8 shows a structure of a still further embodiment of a type wherein an infrared heater 50 supplied with the current from a power source 30 is disposed close to the side opposite to the surface irradiated with a laser beam L, of a thermo-sensitive recording medium Sc having, as a support, an endothermic or heat absorption layer 48 containing infrared absorbing dyes, for example, instead of the resistance heat generating layer 38 of each of the thermo-sensitive recording mediums S, Sa as shown in FIGS. 2 and 4. Infrared radiation emitted from the infrared heater 50 is absorbed by the heat absorption layer 48, thereby preheating the thermo-sensitive recording medium Sc. Since the infrared heater 50 is not brought into contact with the thermo-sensitive recording medium Sc in this case, the thermo-sensitive recording medium Sc can be smoothly conveyed.

Incidentally, a warm air heater 39 may also be used as an alternative to the infrared heater 50 as shown in FIG. 9 to feed warm air to a thermo-sensitive recording medium Sc and preheat the same. In this case, the thermo-sensitive recording medium Sc can be preheated from both sides thereof by the warm air heater 39.

Further, the thermo-sensitive recording medium Sc may also be preheated by each of infrared heaters 49 shown in FIGS. 10A and 10B. If a reflector 50 for surrounding each of the infrared heaters 49 is elongated as compared with the width of the thermo-sensitive recording medium Sc, which extends in the direction orthogonal to its conveying direction (i.e., in the direction indicated by the arrow), then air heated by the preheating can be discharged to the outside from both ends of the reflector 50. Therefore, undesired portions are no longer preheated by the circulation of the air by convection, and the ununiformity in heating, which is caused by the circulation of the air by convection, can be avoided. It is thus possible to effect preheat control with high accuracy.

### (Fifth Embodiment)

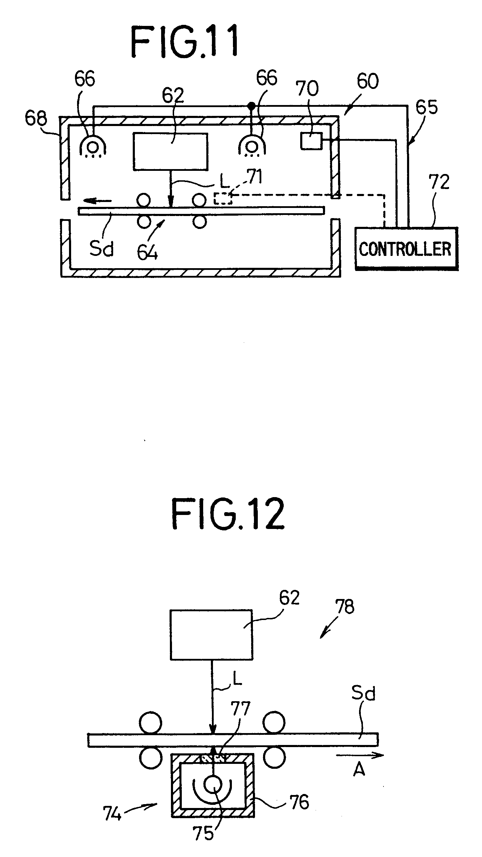

FIG. 11 shows a thermal recording system 60 according to a still further embodiment. The thermal recording system 60 is so constructed that a scan optical system 62 having the components of the laser diode 12 (corresponding to the cylindrical mirror 24 shown in FIG. 1), and a recording unit 64 for irradiating a thermo-sensitive recording medium Sd with a laser beam L emitted from the scan optical system 62, are accommodated in a thermal-insulated casing 68 and cut off from the outside. Further, the thermal recording system 60 has a temperature controlling means 65 for controlling the temperature in the thermal-insulated casing 62 so that the thermo-sensitive recording medium Sd is held at a preheat temperature. The temperature controlling means 65 comprises a heating means 66 such as a lamp, a temperature sensor 70 and a controller 72. Further, the thermo-sensitive recording medium Sd is composed of a recording medium layer formed on a support. The temperature in the thermal-insulated casing 68 is detected by the temperature sensor 70. The controller 72 controls the heating means 66 in response to the detected temperature in such a manner that the thermo-sensitive recording medium Sd is held at a predetermined preheat temperature. In this case, the heating means 66 can maintain the thermo-sensitive recording medium Sd at a stable preheat temperature, thereby making it possible to obtain an image which is higher in accuracy. Unless the control of an image recording operation based on the laser beam L is effected when the temperature detected by the temperature sensor 70 exceeds the predetermined preheat temperature, an image can be prevented from being recorded improperly.

If a thermo-sensitive recording medium temperature sensor 71 is disposed in the vicinity of the recording unit 64 and on the upstream side thereof so as to directly sense or detect the temperature of the thermo-sensitive recording medium Sd as shown in FIG. 11, then the preheat temperature of the heating means 66, (which has been controlled based on the temperature in the thermal-insulated casing 68, which has been detected by the temperature sensor 70), can be controlled with higher accuracy in accordance with the temperature of the thermo-sensitive recording medium Sd, which has been detected by the thermo-sensitive recording medium temperature sensor 71. Further, the history of the medium temperature detected by the thermo-sensitive recording medium temperature sensor 71 can be recorded. It is also possible to improve the accuracy of a predicted value of the preheat temperature of the thermo-sensitive recording medium Sd with respect to the temperature in the thermal-insulated casing 68 based on data indicative of the history. As a result, the accuracy of the recorded image can be further improved. Incidentally, the temperature control may be effected by the thermo-sensitive recording medium temperature sensor 71 alone without providing the temperature sensor 70.

### (Sixth Embodiment)

FIG. 12 shows a thermal recording system 78 constructed in such a manner that a thermo-sensitive recording medium Sd is preheated by using a preheating unit 74 shaped in the form of a closed type structure comprising a thermal-insulated casing 76 for an infrared heater 75, and a filter 77 which is fitted in an opening or aperture defined in the casing 76 in confronting relationship to a recording portion on the thermo-sensitive recording medium Sd. In this case, only a necessary portion of the thermo-sensitive recording medium Sd is preheated by the infrared radiation emitted from the infrared heater 75 through the filter 77. Therefore, the thermal recording system 78 does not produce an excess increase in temperature. Further, since the preheating unit 74 is of the closed type structure, the circulation of air in the thermal recording system 78 by convection is limited due to the heat of the infrared radiation. Accordingly, the recording portion can be locally preheated with high accuracy. If the aperture defined in the thermal-insulated casing 76 is sufficiently small, then the filter 77 is unnecessary.

### (Seventh Embodiment)

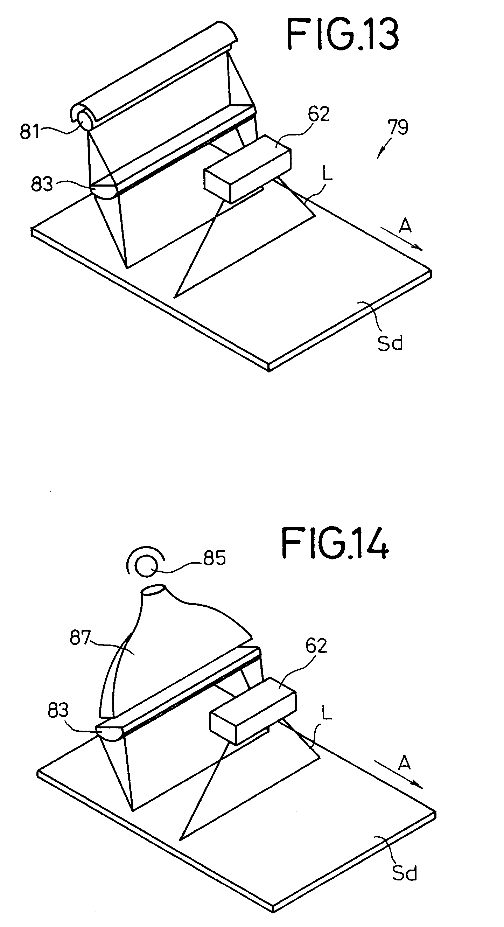

FIG. 13 illustrates a thermal recording system 79 of a type wherein a thermo-sensitive recording medium Sd is preheated by using a near infrared lamp 81 which is elongated in a main scanning direction of the thermo-sensitive recording medium Sd and outputs near infrared radiation therefrom. In the thermal recording system 79, a cylindrical lens 83 lengthened in the main scanning direction is disposed between the near infrared lamp 81 and the thermo-sensitive recording medium Sd. If, in this case, dyes for absorbing near infrared radiation of a predetermined wavelength, which passes through the cylindrical lens 83, are contained in a recording medium layer of the thermo-sensitive recording medium Sd, then the thermo-sensitive recording medium Sd can be effectively preheated. That is, since the near infrared radiation can be focused on the thermo-sensitive recording medium Sd using the cylindrical lens 83, the thermo-sensitive recording medium Sd can be efficiently preheated in a short period of time. Further, since a preheating range can be limited to necessary portions alone by using the cylindrical lens 83 or selecting the wavelength of the near infrared radiation which passes through the cylindrical length 83 and the near infrared radiation absorbing dyes, the preheating can be more accurately effected. In the present embodiment, the thermo-sensitive recording medium Sd is preheated from the same direction as that in which a recording laser beam L travels. However, the preheating can be effected even from either direction.

Now, the preheating can be effected by using a near infrared lamp 85 which serves as a point or spot light source and disposing a light introducing member 87, which has one end concentrated closely to the near infrared lamp 85 and the other end extending along the longitudinal direction of a cylindrical lens 83, between the near infrared lamp 85 and the cylindrical lens 83 as shown in FIG. 14. In this case, the light introducing member 87 receives near infrared radiation emitted from the near infrared lamp 85 as a linear light source and introduces the same into a thermo-sensitive recording medium Sd through the cylindrical lens 83. Therefore, the nonuniformity in preheating, which is caused by a variation in a light-emitting characteristic of a light source, can be avoided as in the case where the linear light source is used, for example.

### (Eighth Embodiment)

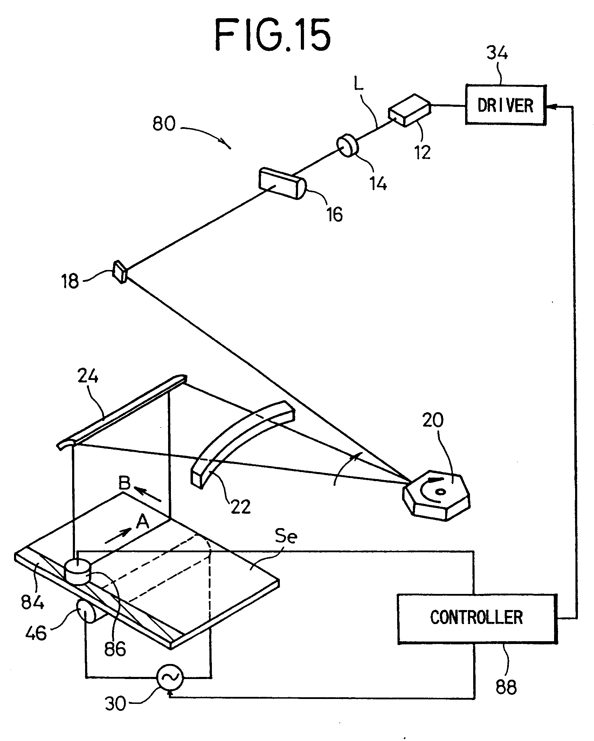

FIG. 15 shows a thermal recording system 80 according to a still further embodiment. In this case, the same elements of structure as those employed in the thermal recording system 10 show in FIG. 1 are identified by like reference numerals and their description will therefore be omitted.

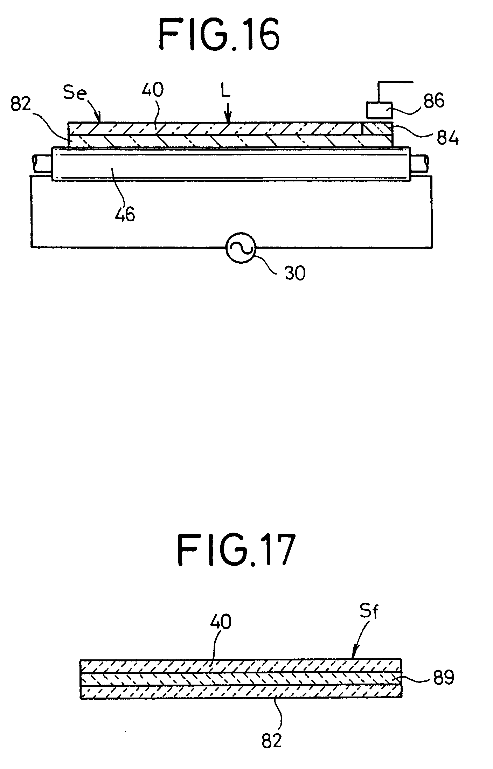

As shown in FIG. 16, a thermo-sensitive recording medium Se employed in the thermal recording system 80 is so constructed that a thermo-sensitive layer 40 is formed on a support 82. Further, a preheat-type color-developing portion 84 having a color development characteristic for producing or developing color at a temperature (as represented by a characteristic curve b shown in FIG. 3), lower than the temperature of the thermo-sensitive layer 40 (as represented by the characteristic curve a), is formed on one side of the thermo-sensitive recording medium Se. On the other hand, the thermal recording system 80 comprises a heat roller 46 which serves as a preheating unit held in rolling contact with the thermo-sensitive recording medium Se, a densitometer 86 provided close to the preheat-type color-developing portion 84 of the thermo-sensitive recording medium Se, and a controller 88 for controlling a driver 34 and controlling a power source 30 based on the density of the preheat-type color-developing portion 84, which has been detected by the densitometer 86.

In the thermal recording system 80 constructed as described above, the power source 30 supplies current to the heat roller 46 under the control of the controller 88 so as to heat the heat roller 46. As a result, the thermo-sensitive recording medium Se is preheated by the heat roller 46. At this time, the density of the thermo-sensitive layer 40 of the thermo-sensitive recording medium Se does not vary, whereas the density of the preheat-type color-developing portion 84 varies. Therefore, the densitometer 86 detects the density of the preheat-type color-developing portion 84 and supplies data indicative of its density to the controller 88. Then, the controller 88 controls the power source 30 so that the density data is brought to a density D at the temperature of T1, with the result that the thermo-sensitive recording medium Se is preheated at the temperature of T1. Since, at this time, the temperature of the thermo-sensitive recording medium Se is directly detected, the preheat temperature can be controlled with high accuracy. If the preheat temperature is adjusted and the output of the laser beam L is controlled based on the preheat temperature, then an image more excellent in quality can be obtained.

Now, a thermo-sensitive recording medium Sf shown in FIG. 17 may be used as an alternative to the thermo-sensitive recording medium Se. More specifically, the thermo-sensitive recording medium Sf is constructed in such a manner that a preheat-type color-developing layer 89 composed of a thermochromic material which gives rise to color at the density corresponding to the temperature and returns to the original density upon the reduction in temperature, is formed on a support 82, and a thermo-sensitive layer 40, which exhibits a light-transmissive characteristic upon the non-development of the color, is fabricated on the preheat-type color-developing layer 89. Further, the preheat temperature can be controlled by measuring, using the densitometer 86, the density of the preheat-type color-developing layer 89 which has been subjected to a preheating process. Since, in this case, the density of the preheat-type color-developing layer 89 is returned to the original density with a decrease in temperature after the recording of the image has been completed, the density of the preheat-type color-developing layer 89 has no influence on the image density of the thermo-sensitive layer 40. Thus, when such a thermo-sensitive recording medium Sf is used, an image recording region is not restricted by the preheat-type color-developing layer 89 and the degree of freedom of location of the densitometer 86 is also improved. If the support 82 is composed of a light-transmissive material, for example, then the densitometer 86 can also be disposed on the support 82 side.

### (Ninth Embodiment)

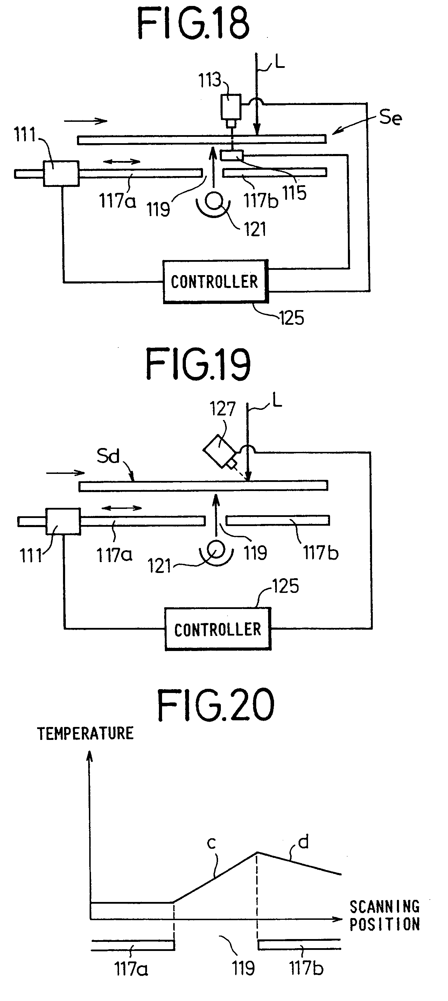

FIG. 18 shows a still further embodiment of a type wherein a preheat temperature is adjusted by using a variable aperture. In the present embodiment, a thermo-sensitive recording medium Se is irradiated with preheating light emitted from a preheating light source 121. Then, the intensity of the light which passes through a preheat-type color-developing portion 84 (see FIG. 16), is detected by a light-emitting device 113 and a light intensity detector 115 both opposed to each other with the thermo-sensitive recording medium Se interposed therebetween. To bring the detected light intensity to a predetermined intensity, a controller 125 controls a drive mechanism 111 such as a rack and pinion to thereby displace a variable member 117 in such a way as to adjust the width of the aperture 119. As a result, the preheat temperature can be controlled so as to reach a desired temperature. If the preheat temperature is controlled in this way, then the preheat temperature control can be effected at higher speed as compared with the case where the temperature adjustment is effected by the heat roller 46. Further, since a temperature adjustment of the preheating light source 121 becomes unnecessary, the capacity of heat generated by the preheating light source 121 can be increased, thereby making it possible to reduce the generation of nonuniformity in temperature distribution to the minimum.

If a radiation thermometer 127 is used as an alternative to the light-emitting device 113 and the light intensity detector 115 as shown in FIG. 19, then the preheat temperature can be controlled with high accuracy in the same manner as described above even in the case of a thermo-sensitive recording medium Sd in which the preheat-type color-developing portion 84 is not included in particular. In the embodiments shown in FIGS. 18 and 19, heating temperature control can be effected with high accuracy by directly measuring the temperature of a fixed member 117b used for defining the aperture 119 with a thermometer and by correcting, with the variable member 117a, an increase in temperature at which the thermo-sensitive recording medium Se is heated.

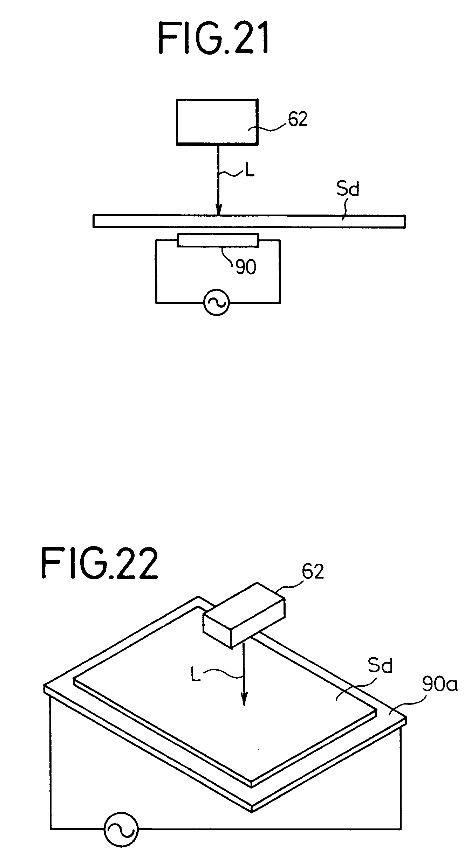

If the position of the laser beam L by which an image is recorded on the thermo-sensitive recording medium Se or Sd, is set to the fixed member 117b side in the embodiment shown in FIG. 18 or 19, then the image can be recorded thereon with higher accuracy. That is, a temperature characteristic c which has been obtained by effecting the preheating through the aperture 119, is represented as a temperature characteristic d as shown in FIG. 20 in the case of the fixed member 117b side. In this case, the rate of change in the temperature characteristic d is smaller than the rate of change in the temperature characteristic c. Therefore, a desired image can be recorded under a stabler preheat temperature so long as the fixed member 117b is irradiated with the recording laser beam L.

In the respective embodiments referred to above, there are provided the preheating means such as the electrode rollers 26a, 26b, the heat rollers 46, etc. which are directly brought into rolling contact with the thermo-sensitive recording mediums S, Sa, Sb, Se, and the preheating means such as the infrared heater 50, the lamp, etc. which are held in non-contact with the thermo-sensitive recording mediums Sc, Sd.

In this case, a thermal head, a thermal plate, etc. other than the electrode rollers, the heat rollers, etc. can be used as the former preheating means. When the preheating means such as the thermal plate, which is large in heat capacity, is used, the preheating may also be effected in a state in which the preheating means is not in contact with the thermo-sensitive recording mediums.

### (Tenth Embodiment)

FIG. 21 is a view for describing a thermal recording system in which a thermal plate 90 is used. A thermo-sensitive recording medium Sd having a recording medium layer formed on a support is preheated to a predetermined temperature by the thermal plate 90 disposed so as to be spaced slightly from the thermo-sensitive recording medium Sd. In this condition, an image is recorded on the thermo-sensitive recording medium Sd by using a laser beam L emitted from a scan optical system 62. Since an interval or gap defined as an air layer, is defined between the thermo-sensitive recording medium Sd and the thermal plate 90, a thermal insulating effect can be improved, thus causing no problem that the preheat temperature exceeds the predetermined temperature by heating the thermal plate 90 with the heat energy of the laser beam L. Further, an effect for holding the heat energy of the laser beam L can be exhibited. As a result, the thermo-sensitive recording medium Sd can be stably preheated. Furthermore, the color-developing temperature of the thermo-sensitive recording medium Sd can be accurately set up, thereby making it possible to effect the recording of the image on the thermo-sensitive recording medium Sd with high accuracy.

### (Eleventh Embodiment)

FIG. 22 illustrates a still further embodiment in which a thermal plate 90a whose size is larger than that of a thermo-sensitive recording medium Sd with respect to each of main and auxiliary scanning directions, is used. Since, in this case, the entire surface of the thermo-sensitive recording medium Sd is uniformly heated by the thermal plate 90a, the extension of the thermo-sensitive recording medium Sd, which is caused by heat, becomes uniform as a whole. Thus, any local strain is not developed in the thermo-sensitive recording medium Sd and an image can be recorded with higher accuracy. Incidentally, the thermal plate 90a can be brought into either contact or noncontact with the thermo-sensitive recording medium Sd.

### (Twelfth Embodiment)

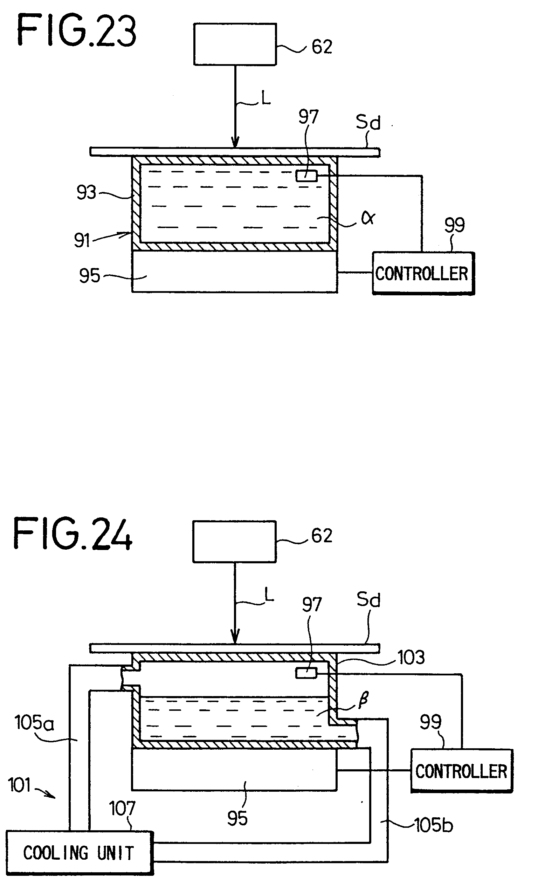

FIG. 23 shows a thermal recording system having a preheating unit 91 in which the melting point of a substance α is used. Substance α melts at a preheat temperature of a thermo-sensitive recording medium Sd and varies from a solid to a liquid. The preheating unit 91 is constructed in such a manner that a casing 93 for accommodating therein the substance α, is brought into contact with the thermo-sensitive recording medium Sd. The substance α is heated and melted by a heater 95. Further, the temperature of the substance α, which has been detected by a temperature sensor 97, is controlled so as to be maintained at a constant temperature by a controller 99. Since, at this time, the temperature of the melting point at the time that the substance α varies from the solid to the liquid, is stable to the energy applied from the outside, highly accurate temperature control can be easily effected. Incidentally, examples of the substance α include 2N₂H₄·H₂SO₄ (melting point of about 85°C), low-melting solder (melting point of about 100°C), thio-acetamide (melting point of 115°C), tri-bromo acetic acid (melting point of about 135°C), and In (melting point of about 155°C).

### (Thirteenth Embodiment)

FIG. 24 illustrates a thermal recording system having a preheating unit 101 in which the boiling point of a substance β is used. Substance β boils at a preheat temperature of a thermo-sensitive recording medium Sd and varies from the liquid to the gas. The preheating unit 101 is constructed such that a casing 103 for accommodating therein the substance β, is brought into contact with the thermo-sensitive recording medium Sd. The substance β is heated and boiled by a heater 95. Further, the temperature of the substance β, which has been detected by a temperature sensor 97, is controlled so as to be kept at a constant temperature under the control of a controller 99. Then, the substance β is supplied via a line 105a to a cooling unit 107 where it is cooled. Thereafter, the substance β is returned to the casing 103 through a line 105b again. Since, at this time, the temperature of the boiling point at the time that the substance β changes from the liquid to the gas, is stable to the energy applied from the outside, highly accurate temperature control can be easily effected. Incidentally, examples of the substance β include ethyl alcohol (boiling point of about 78.5°C), water (boiling point of about 100°C), acetic acid (boiling point of about 118.1°C), acetic anhydride (boiling point of about 140°C).

### (Fourteenth Embodiment)

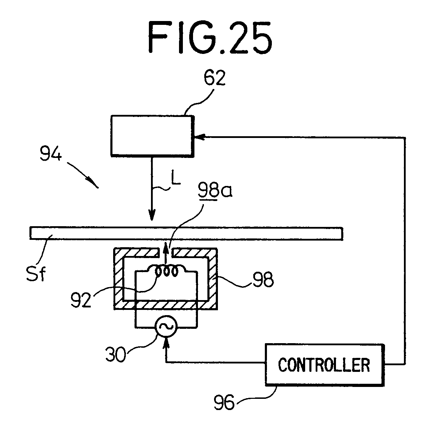

On the other hand, other means using electromagnetic waves or the like may be used as a preheating means employed under a non-contact condition. FIG. 25 schematically shows the structure of a thermal recording system 94 in which a high-frequency induction coil 92 is used as a preheating means. In the thermal recording system 94, the high-frequency induction coil 92 is provided close to a thermo-sensitive recording medium Sf having a support made of metal. Further, the high-frequency induction coil 92 is energized under the control of a controller 96 so as to preheat the thermo-sensitive recording medium Sf. The high-frequency induction coil 92 is surrounded by a slit member 98 having a slit 98a defined therein so as to extend along a preheating portion of the thermo-sensitive recording medium Sf, and held in a shielded state. Accordingly, an image, which does not include stain or the like and is excellent in accuracy, is formed on the thermo-sensitive recording medium Sf because only a portion of the thermo-sensitive recording medium Sf, which is required to record the image, is preheated. Obviously alternative means of preheating, such as high frequency induction plates bracketing medium Sf, may be employed.

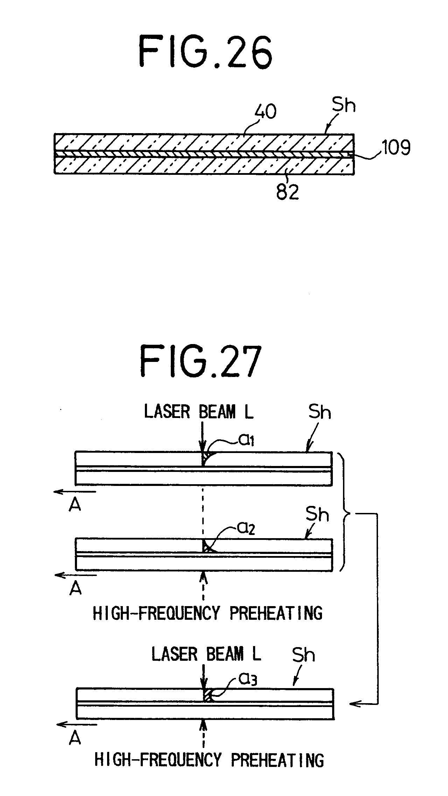

In FIG. 26, a thermo-sensitive recording medium Sh having a conductive layer 109 defined between a thermo-sensitive layer 40 and a support 82 and made of such a material as a transparent electrode, is used as an alternative to the thermo-sensitive recording medium Sf employed in the embodiment shown in FIG. 25. A distribution a₁ of heat energy given by the laser beam L and a distribution a₂ of heat energy produced by the high-frequency induction coil 92 are represented as shown in FIG. 27, where the direction in which the thermo-sensitive recording medium Sh is fed is shown by arrow A. Accordingly, a distribution a₃ of heat energy, which is obtained by combining a₁ and a₂, extends substantially in a uniform state from the surface of the thermo-sensitive layer 40 to a deeper portion thereof. Further, since such a distribution can be locally achieved, a high-density image recording can be carried out.

### (Fifteenth Embodiment)

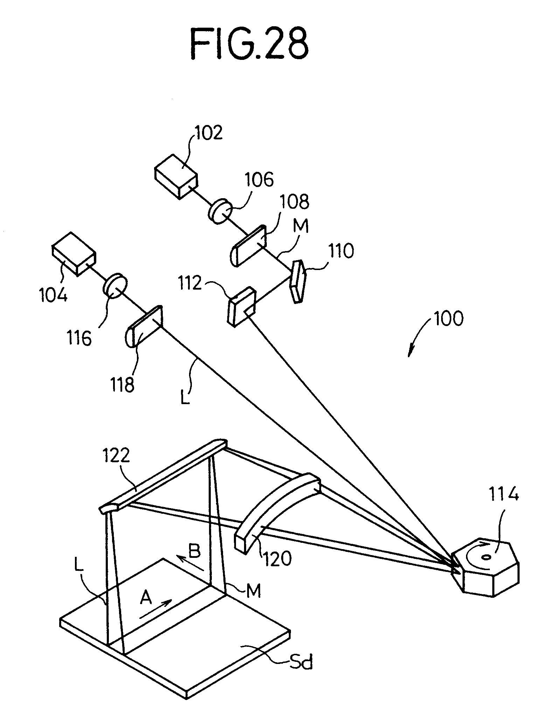

Further, a thermal recording system 100 using a preheating laser beam M can also be used as shown in FIG. 28. Described specifically, the thermal recording system 100 has a laser diode 102 for generating the preheating laser beam M and a laser diode 104 for producing a recording laser beam L. The laser beam M is introduced to a polygon mirror 114 through a collimator lens 106, a cylindrical lens 108 and mirrors 110, 112 in that order. On the other hand, the laser beam L is transmitted to the polygon mirror 114 through a collimator lens 116 and a cylindrical lens 118. Then, a thermo-sensitive recording medium Sd is irradiated with the respective laser beams M, L reflected by the polygon mirror 114 through an fθ lens 120 and a cylindrical lens 122. In this case, the preheating laser beam M scans the upstream side, extending in the auxiliary scanning direction, of the thermo-sensitive recording medium Sd as seen from the scanning position of the recording laser beam L, and heats the thermo-sensitive recording medium Sd to a temperature immediately before the color development. As a result, an optical system ranging from the polygon mirror 114 to the thermo-sensitive recording medium Sd can be used in common. Further, since the laser beam M can accurately heat only the required portion of the thermo-sensitive recording medium Sd, an image excellent in accuracy can be obtained. Incidentally, the preheating can also be effected by shifting the scanning positions of the laser beams M and L on the thermo-sensitive recording medium Sd in the main scanning direction as well as in the auxiliary scanning direction.

In the embodiment shown in FIG. 28, the laser beams L, M may also be introduced into the thermo-sensitive recording medium Sd through the opposite reflecting surfaces of the polygon mirror 114 so as to simultaneously effect both the preheating and the image recording. In this case, the scanning directions of the preheating laser beam M and the recording laser beam L are set in the opposing relationship.

### (Sixteenth Embodiment)

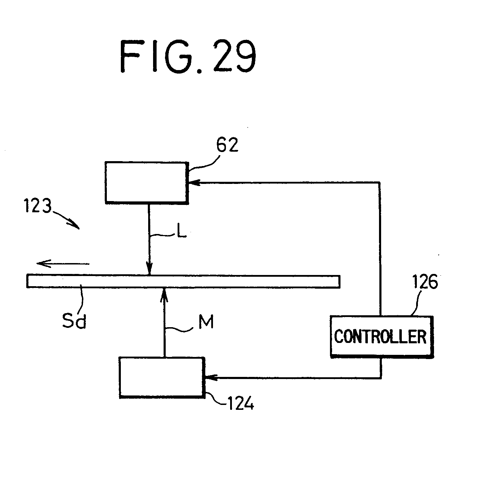

Furthermore, as shown in FIG. 29, a thermal recording system 123 may be comprised of a scan optical system 62 controlled by a controller 126, for outputting a recording laser beam L, and a scan optical system 124 constructed in a manner similar to the scan optical system 62 and controlled by the controller 126, for outputting a preheating laser beam M.

### (Seventeenth Embodiment)

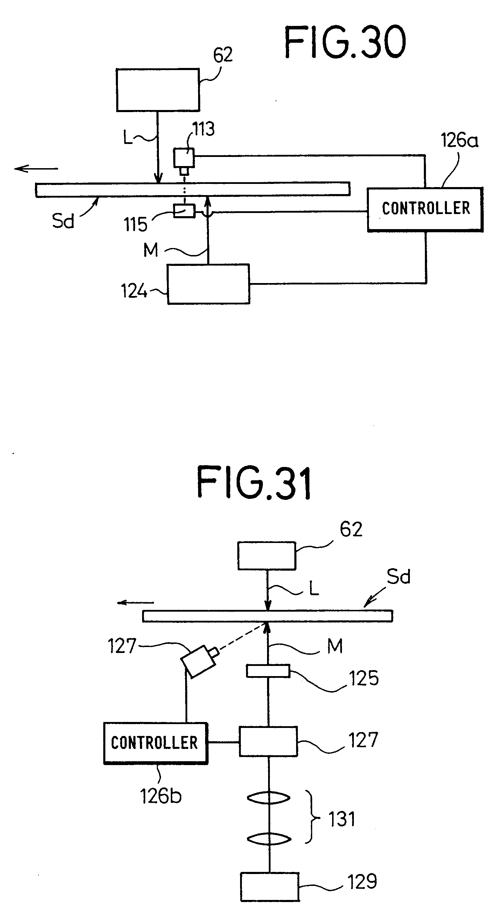

FIG. 30 shows a still further embodiment of a type wherein a scan optical system 124 for outputting a laser beam M is used as an alternative to the preheating light source 121 employed in the ninth embodiment (see FIG. 18). In this case, the transmissivity, i.e., the rate of light transmitted through the thermo-sensitive recording medium Se varies due to the irradiation of the thermo-sensitive recording medium Se with the laser beam M. That is, the so-called haze effect is exhibited that a light scattering characteristic varies according to the intensity of the laser beam M emitted from the scan optical system 124. (However, it should not be limited to the laser beam M to obtain the haze effect, e.g. other preheating means can be used to obtain the haze effect as described herein, such as heat roller, heat coil, etc.) Therefore, such a variation is detected as the intensity of the transmitted light by a light-emitting device 113 and a light intensity detector 115 both opposed to each other with the thermo-sensitive recording medium Se interposed therebetween. Then, the output level of the laser beam M is controlled by a controller 126a to bring the detected intensity of transmitted light to a predetermined intensity. In doing so, a preheat temperature can be adjusted so as to reach the optimum temperature.

### (Eighteenth Embodiment)

FIG. 31 illustrates a still further embodiment in which a preheat temperature of a thermo-sensitive recording medium Se is detected by a radiation thermometer 127 and the intensity of a laser beam M is controlled based on the detected preheat temperature. The laser beam M emitted from a light source 129 is focused by condenser lenses 131 and subjected to the intensity modulation by an acoustooptic modulator (AOM) 127. Thereafter, the so-processed laser beam M is diverged in a main scanning direction (i.e., in the direction orthogonal to the direction indicated by the arrow) through a cylindrical lens 125 so as to be radiated into the thermo-sensitive recording medium Se. Then, a controller 126b controls the AOM 127 so that the preheat temperature which has been detected by the radiation thermometer 127, is set to a desired temperature. Since, in this case, the laser beam M is focused by the condenser lenses 131 and diverged only in the main scanning direction through the cylindrical lens 125, only a necessary portion of the thermo-sensitive recording medium Se can be efficiently preheated.

When, on the other hand, a transverse single-mode laser diode is used as a source for generating the recording laser beam L and a transverse multi-mode laser diode is used as a source for generating the preheating laser beam M, a preheating range can be made wide and an image recording region can be easily sharpened. Further, the diameter of the laser beam L may be set shorter than that of the laser beam M by using a lens or the like. Moreover, a laser beam M of a high output level can be obtained by pulse-modulating the laser beam M in synchronism with a pixel frequency of an image to be recorded.

### (Nineteenth Embodiment)

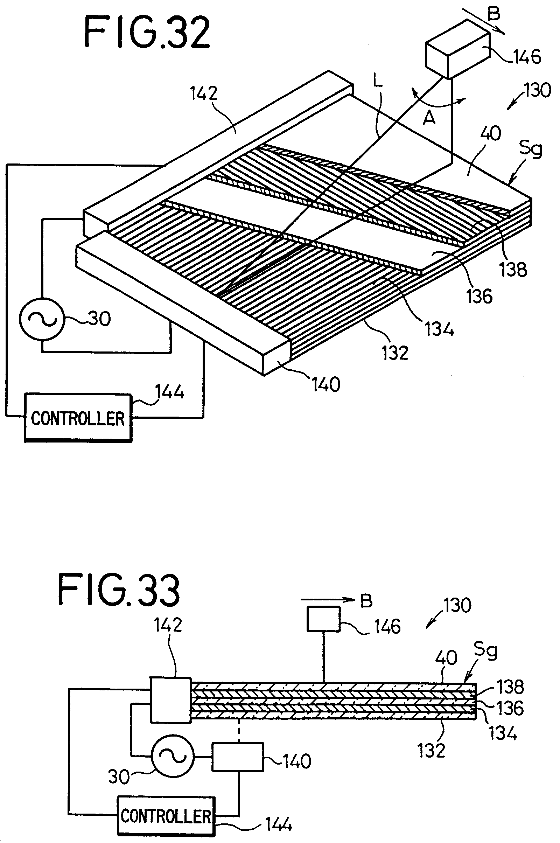

FIGS. 32 and 33 respectively show a thermal recording system 130 according to a still further embodiment of the present invention. The thermal recording system 130 makes use of a thermo-sensitive recording medium Sg having electrodes arranged in the form of a matrix. The thermo-sensitive recording medium Sg comprises a first electrode layer 134 formed on a support 132 and having a plurality of electrodes extending in parallel along the main scanning direction, a conductive resistance heating or heat generating layer 136 formed on the first electrode layer 134, a second electrode layer 138 formed on the resistance heat generating layer 136 and having a plurality of electrodes extending in parallel along the auxiliary scanning direction, and a thermo-sensitive layer 40 formed on the second electrode layer 138.

In the thermal recording system 130, a first electrode scanning unit 140 is electrically connected to the first electrode layer 134 of the thermo-sensitive recording medium Sg. Further, a second electrode scanning unit 142 is electrically connected to the second electrode 138. A power source 30 is energized to enable the electrical connection between the first and second electrode scanning units 140 and 142. In this case, a controller 144 controls the first and second electrode scanning units 140, 142 so that the electrodes to be energized are selected. As a result, the resistance heat generating layer 136 between the selected electrodes generates heat, so that a desired region of the thermo-sensitive recording medium Sg is preheated. On the other hand, a desired image is recorded on the thermo-sensitive recording medium Sg preheated as described above by scanning the thermo-sensitive recording medium Sg along the main scanning direction with a laser beam L outputted from a recording unit 146 fed for the auxiliary scanning in the direction indicated by the arrow B.

In the aforementioned embodiment, only a desired portion of the thermo-sensitive recording medium Sg can be preheated by arranging the plurality of electrodes in matrix form. Accordingly, this preheating process is economical as compared with a process for preheating the overall surface of the thermo-sensitive recording medium Sg. When the overall surface of the thermo-sensitive recording medium Sg is preheated at a time, a temperature gradient is developed in a recording surface. However, only a necessary recording portion immediately before the image recording can be preheated at a constant temperature by controlling the first and second electrode scanning units 140, 142 and displacing a heating portion in turn in the auxiliary scanning direction (i.e., in the direction indicated by the arrow B) while following the scanning based on the laser beam L. Therefore, the temperature control can be effected economically and with high accuracy. Thus, the recording of an image on the thermo-sensitive recording medium Sg can be accurately carried out.

### (Twentieth Embodiment)

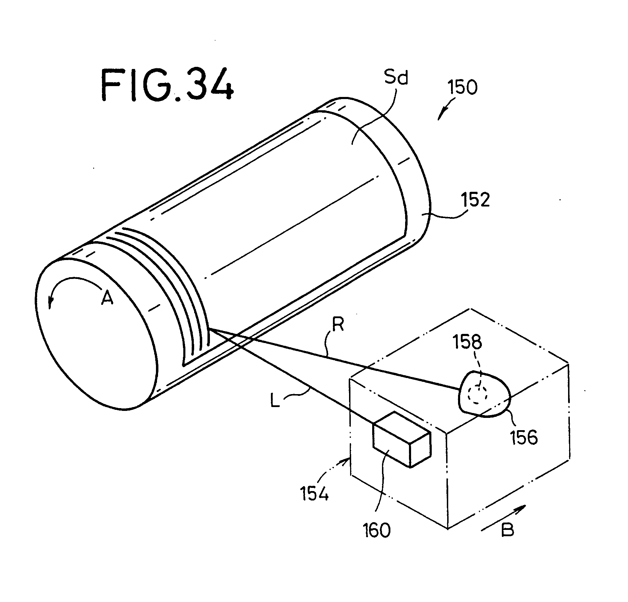

FIG. 34 shows a drum-type thermal recording system 150. In the thermal recording system 150, a thermo-sensitive recording medium Sd is mounted on the outer peripheral surface of a drum 152 rotated in the direction indicated by the arrow A. An image is two-dimensionally recorded on the thermo-sensitive recording medium Sd by a scanning unit 154 displaced in the direction indicated by the arrow B. Described specifically, the scanning unit 154 accommodates therein a halogen lamp 158 and an associated reflector 156 used as a preheating means, and a recording laser 160. The thermo-sensitive recording medium Sd is preheated by infrared radiation R emitted from the halogen lamp 158. Then, the preheated portion is irradiated with a laser beam L emitted from the recording laser 160, thereby recording the image on its portion. In this case, the infrared radiation R can efficiently preheat only a recording portion of the thermo-sensitive recording medium Sd. Further, the scanning unit 154 can be extremely simplified in structure.

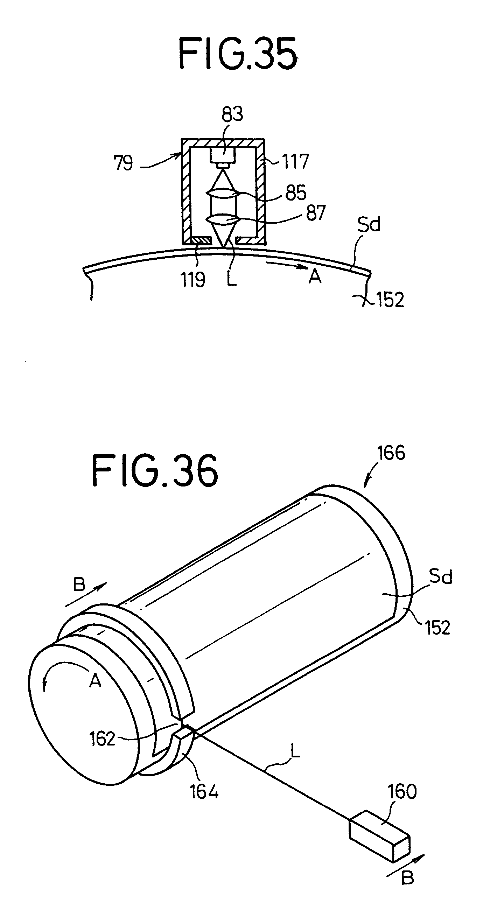

Incidentally, the scanning unit 154 may also be constructed as shown in FIG. 35. FIG. 35 shows a scanning unit 79 composed of a preheating means and a heating-beam generating means both combined into a single unit. The scanning unit 79 has a laser diode 83 for producing a recording laser beam L, a collimator lens 85 for collimating the laser beam L, and a condenser lens 87 for causing the laser beam L to converge on the recording portion of the thermo-sensitive recording medium Sd, all of which are surrounded by a casing 117. Further, a heater 119 such as a thermal head or the like is integrally mounted to a portion of the casing 117, which is close to the upstream side of the thermo-sensitive recording medium Sd. The previous stage of the recording portion of the thermo-sensitive recording medium Sd is preheated by the heater 119 and then heated with the laser beam L emitted from the laser diode 83, thereby recording an image on the recording portion. Since, in this case, the heater 119 preheats a recording surface of the thermo-sensitive recording medium Sd irradiated with the laser beam L in the same manner as in FIG. 34, the thermal efficiency is raised. Further, the integral formation of both the preheating means and the heating-beam generating means greatly contributes to a size reduction in the thermal recording system.

### (Twentyfirst Embodiment)

FIG. 36 shows a thermal recording system 166 in which the preheating means shown in FIG. 34 is provided separately from the heating means, that is, a ring-shaped preheating member 164 having a gap or interval 162 defined in a part thereof, is loose-fit on the outer peripheral surface of a drum 152 and then fed for auxiliary scanning in the direction indicated by the arrow B together with a recording laser 160. Since a recording portion is surrounded by the ring-shaped preheating member 164 in this case, the dissipation of heat can be reduced. Further, since the thermo-sensitive recording medium Sd can be stably preheated, a desired image can be highly accurately recorded.

The preheating and heating directions may be set to any one or all surfaces of the thermo-sensitive re-cording medium in the above respective embodiments.

The thermal recording system according to the present invention can bring about the following advantageous effects.

That is, leuco dyes, a developer and light-absorbing dyes are provided on a support. Further, a thermo-sensitive recording medium, which develops color at a density corresponding to the energy of applied heat, is preheated up to a temperature immediately before the color development. Therefore, a heating-beam generating means controls a laser beam in a sufficient control range so that an image or the like can be recorded. Accordingly, a high-tonal image can be formed with high accuracy. It is therefore unnecessary for the heating-beam generating means to produce an high output in particular. As a result, the thermal recording system can be simplified in overall structure and reduced in cost.

## Claims

1. A thermal recording system comprising:
(i) a thermo-sensitive recording medium (S) which develops color at a density corresponding to the energy of applied heat;
(ii) preheating means (30, 26) for preheating said thermosensitive recording medium (S) to a predetermined temperature less than a predetermined color-developing temperature; and
(iii) heating-beam generating means (12) for scanning said thermo-sensitive recording medium (S) with a laser beam (L) so as to heat said thermo-sensitive recording medium (S) to said predetermined color-developing temperature, **characterized in that** said recording medium comprises a thermo-sensitive layer formed on a support (36) by providing microcapsules containing leuco dyes, a developer and light-absorbing dyes in a coating layer and thereafter applying said coating layer on said support (36).

2. A thermal recording system according to claim 1, wherein said heating-beam generating means is controlled in such a manner that an image is recorded on said thermo-sensitive recording medium (S) in multitonal form.

3. A thermal recording system according to claim 1, wherein said predetermined temperature is between 40° and 275°C.

4. A thermal recording system according to claim 1, wherein said preheating means preheats for 30 seconds or less.

5. A thermal recording system according to claim 1, wherein said preheating means comprises a conductive heat-generating layer (38) formed in said thermo-sensitive recording medium (S) and a current supply circuit (30) for supplying current to said conductive heat-generating layer (38) so as to bring said conductive heat-generating layer (38) to said predetermined temperature.

6. A thermal recording system according to claim 5, wherein said current supply circuit (30) supplies the current to said conductive heat-generating layer (38) through two electrodes (26a, 26b) held in contact with two points thereof spaced away from each other along the scanning direction of the laser beam.

7. A thermal recording system (130) according to claim 5, wherein said thermo-sensitive recording medium (Sg) comprises a plurality of first (134) and second (138) parallel electrode lines arranged along main and auxiliary scanning directions respectively, said first and second parallel electrode lines (134, 138) being disposed in an opposing relationship with said conductive heat-generating layer (136) interposed therebetween, and said current supply circuit (30) comprises first electrode selecting means (144, 140) for selecting a desired electrode line from said plurality of first parallel electrode lines (134), second electrode selecting means (144, 142) for selecting a desired electrode line from said plurality of second parallel electrode lines (138), and current supplying means (30) for supplying current to said first and second electrode selecting means.

8. A thermal recording system according to claim 1, wherein said preheating means has heat generating means for heating at least a portion of said thermo-sensitive recording medium (S), said portion being located near a position where said thermo-sensitive recording medium is scanned with the laser beam (L), in a state in which said portion is in contact with said heat generating means.

9. A thermal recording system according to claim 8, wherein said heat generating means comprises a heat roller (46) having a shaft substantially parallel to the scanning direction of the laser beam (L).

10. A thermal recording system according to claim 8, wherein said heat generating means comprises a heating material( α ) accommodated in a molten state within a casing (93) held in contact with said thermo-sensitive recording medium (Sd), and a temperature controller (99) for maintaining said heating material ( α )at a molten-status temperature at which said heating material ( α ) changes from a solid to a liquid.

11. A thermal recording system according to claim 8, wherein said heat generating means comprises a heating material ( β ) accommodated in a vaporized state within a casing (103) which is held in contact with said thermo-sensitive recording medium (Sd), and a temperature controller (99) for keeping said heating material ( β ) at a vaporization-status temperature at which said heating material ( β )changes from a liquid to a gas.

12. A thermal recording system according to claim 1, wherein said preheating means has heat generating means for heating the entire surface of said thermo-sensitive recording medium in a state in which said entire surface is not in contact with said heat generating means.

13. A thermal recording system according to claim 1, wherein said preheating means has heat generating means for heating at least a portion of said thermo-sensitive recording medium, said portion being located near a position where said thermo-sensitive recording medium is scanned with the laser beam, in a state in which said portion is not in contact with said heat generating means.

14. A thermal recording system according to claim 13, wherein said heat generating means is a preheating heater for emitting infrared radiation.

15. A thermal recording system according to claim 14, wherein said preheating heater is surrounded by a thermal-insulated casing.

16. A thermal recording system according to claim 13, wherein said heating-beam generating means is provided with a surrounding casing, and said heat generating means comprises a heater attached to a portion of said casing.

17. A thermal recording system according to claim 13, wherein said heat generating means is a thermal plate (90) for emitting infrared radiation.

18. A thermal recording system according to claim 13, wherein said heat generating means is a high-frequency induction coil (92).

19. A thermal recording system according to claim 13, wherein said heat generating means is a high-frequency induction electrode.

20. A thermal recording system according to claim 13, wherein said preheating means has a slit member (98) disposed between said heat generating means and said thermo-sensitive recording medium, for restricting the irradiation region of heat emitted from said heat generating means to said thermo-sensitive recording medium, to the portion of said thermo-sensitive recording medium, which is located near said scanning position of the laser beam.

21. A thermal recording system according to claim 13, wherein said preheating means has a light source (102) for emitting infrared radiation (M) including wavelengths absorbed by infrared absorbing dyes contained in the said thermo-sensitive recording medium, and light condensing means (106, 108, 120, 122) for concentrating at least infrared radiation of said wavelengths on said thermo-sensitive recording medium.

22. A thermal recording system according to claim 21, wherein said light source and said light condensing means are a point light source (85) and a cylindrical lens (83) respectively, and light introducing means (87) for introducing point-like infrared radiation emitted from said light source into said cylindrical lens as linear infrared radiation is disposed between said light source and said light condensing means.

23. A thermal recording system according to claim 1, wherein said preheating means includes a plularity of heat generating means for heating said thermo-sensitive recording medium wherein some of said heat generating means are in contact with said themo-sensitive recording medium and some of said heat generating means are not in contact with said thermo-sensitive recording medium.

24. A thermal recording system according to claim 23, wherein said heat generating means comprises any one of a combination of contact heating portions respectively corresponding to the upstream and downstream sides of said thermo-sensitive recording medium, a combination of the contact heating portion corresponding to the upstream side thereof and a non-contact heating portion corresponding to the downstream side thereof, and a combination of a non-contact heating portion corresponding to the upstream side thereof and the contact heating portion corresponding to the downstream side thereof.

25. A thermal recording system according to claim 23, wherein said heat generating means is constructed so as to heat said thermo-sensitive recording medium by energy generated from an upstream-side heat generating portion of said thermo-sensitive recording medium, such energy being greater than that generated by a downstream-side heat generating portion thereof.

26. A thermal recording system according to claim 1, wherein said preheating means comprises preheating-beam generating means for irradiating a portion of said thermo-sensitive recording medium with another laser beam, said portion being located near the position where said thermo-sensitive recording medium is scanned with the laser beam emitted from said heating-beam generating means and for preheating said thermo-sensitive recording medium to a predetermined preheat temperature.

27. A thermal recording system according to claim 1, wherein said thermo-sensitive recording medium has a heat absorption layer (48) for absorbing preheat produced by said preheating means.

28. A thermal recording system according to claim 1, wherein said preheating means comprises heat generating means for heating said thermo-sensitive recording medium, temperature detecting means for detecting a preheat temperature of said thermo-sensitive recording medium, and temperature controlling means for controlling said heat generating means so as to set the preheat temperature detected by said temperature detecting means to a predetermined temperature.

29. A thermal recording system according to claim 28, wherein said temperature detecting means comprises first temperature detecting means (70) for detecting the temperature in said thermal recording system and second temperature detecting means (71) for detecting the temperature of a recording portion of said thermo-sensitive recording medium.

30. A thermal recording system according to claim 1, wherein said preheating means comprises heat generating means for heating said thermo-sensitive recording means, a preheat-type color-developing portion (84) formed in said thermo-sensitive recording medium and for developing color at a density corresponding to a preheat temperature applied by said heat generating means, a densitometer (86) for detecting the density of said preheat-type color-developing portion, and temperature controlling means (88) for controlling said heat generating means so as to set the density detected by said densitometer to a predetermined density.

31. A thermal recording system according to claim 30, wherein said preheat-type color-developing portion is provided at a portion other than an image recording region of said thermo-sensitive recording medium.

32. A thermal recording system according to claim 30, wherein said preheat-type color-developing por tion comprises a thermo-sensitive recording medium which develops color at a predetermined temperature or above and loses the color at the predetermined temperature or below.

33. A thermal recording system according to claim 1, further comprising:
(i) a slit member having an aperture, wherein said preheating means comprises heat generating means for heating said thermo-sensitive recording means through said aperture;
(ii) a preheat-type color-developing portion formed in said thermo-sensitive recording medium and used to develop color at a density corresponding to a preheat temperature applied by said heat generating means;
(iii) density detecting means for detecting the density of said preheat-type color-developing portion;
and
(iv) controlling means for controlling the width of said aperture so as to set the density detected by said density detecting means to a predetermined density.

34. A thermal recording system (150) according to claim 1, further comprising a rotatable drum (152), wherein said thermo-sensitive recording medium (Sd) is mounted on the outer peripheral surface of said drum, and said preheating means and said heating-beam generating means (154) are moved relative to each other along the direction parallel to the rotataing axis of said drum.

## Patentansprüche

1. Thermoaufzeichnungssystem, umfassend:
i) ein wärmeempfindliches Aufzeichnungsmedium (S), welches Farbe mit einer Dichte entsprechend der zugeführten Energie entwickelt;
ii) eine Vorheizeinrichtung (30, 26) zum Vorerwärmen des wärmeempfindlichen Mediums (S) auf eine vorbestimmte Temperatur, die geringer ist als eine vorbestimmte Farbentwicklungstemperatur; und
iii) eine Heizstrahlgeneratoreinrichtung (12) zum Abtasten des wärmeempfindlichen Aufzeichnungsmediums (S) mit einem Laserstrahl (L), um das wärmeempfindliche Aufzeichnungsmedium (S) auf die vorbestimmte Farbentwicklungstemperatur zu erhitzen, **dadurch gekennzeichnet**, daß das Aufzeichnungsmedium eine wärmeempfindliche Schicht enthält, die auf einem Träger (36) gebildet wird, indem in einer Überzugsschicht Mikrokapseln vorgesehen werden, welche Leukofarbstoffe, einen Entwickler und lichtabsorbierende Farbstoffe enthalten, und anschließend die Überzugsschicht auf den Träger (36) aufgebracht wird.

2. System nach Anspruch 1, bei dem die Heizstrahlgeneratoreinrichtung derart gesteuert wird, daß auf dem wärmeempfindlichen Aufzeichnungsmedium (S) ein Bild in mehrtoniger Form aufgezeichnet wird.

3. System nach Anspruch 1, bei dem die vorbestimmte Temperatur zwischen 40° und 275°C liegt.

4. System nach Anspruch 1, bei dem die Vorheizeinrichtung eine Vorerwärmung für 30 Sekunden oder weniger durchführt.

5. System nach Anspruch 1, bei dem die Vorheizeinrichtung aufweist: eine leitende Wärmeerzeugungsschicht (38), die auf dem wärmeempfindlichen Aufzeichnungsmedium (S) ausgebildet ist, und eine Stromversorgungsschaltung (30) zum Einspeisen von Strom in die leitende Wärmeerzeugungsschicht (38), um die leitende Wärmeerzeugungsschicht (38) auf die vorbestimmte Temperatur zu bringen.

6. System nach Anspruch 5, bei dem die Stromversorgungsschaltung (30) den Strom in die leitende Wärmeerzeugungsschicht (38) über zwei Elektroden (26a, 26b) einspeist, die in Berührung mit zwei Punkten der Schicht gehalten werden, die voneinander entlang der Abtastrichtung des Laserstrahls beabstandet sind.

7. System (130) nach Anspruch 5, bei dem das wärmeempfindliche Aufzeichnungsmedium (Sg) aufweist: mehrere erste (134) und zweite (138) parallele Elektrodenreihen, die entlang der Haupt- bzw. der Nebenabtastrichtung angeordnet sind, wobei die erste und die zweite parallele Elektrodenreihe (134, 138) einander gegenüberliegend mit dazwischen befindlicher leitender Wärmeerzeugungsschicht (136) angeordnet sind, und die Stromversorgungsschaltung (30) eine erste Elektrodenauswahleinrichtung (144, 140) zum Auswählen einer gewünschten Elektrodenreihe aus den mehreren ersten parallelen Elektrodenreihen (134), eine zweite Elektrodenauswahleinrichtung (144, 142) zum Auswählen einer gewünschten Elektrodenreihe aus den mehreren zweiten parallelen Elektrodenreihen (138) und eine Stromversorgungseinrichtung (30) zum Einspeisen von Strom in die erste und die zweite Elektrodenauswahleinrichtung aufweist.

8. System nach Anspruch 1, bei dem die Vorheizeinrichtung eine Wärmeerzeugungseinrichtung zum Erwärmen mindestens eines Abschnitts des wärmeempfindlichen Aufzeichnungsmediums (S) aufweist, wobei dieser Abschnitt sich in der Nähe einer Stelle befindet, an der das wärmeempfindliche Aufzeichnungsmedium mit dem Laserstrahl (L) in einem Zustand abgetastet wird, in welchem sich der Abschnitt in Berührung mit der Wärmeerzeugungseinrichtung befindet.

9. System nach Anspruch 8, bei dem die Wärmeerzeugungseinrichtung eine Heizwalze (46) aufweist, deren Welle etwa parallel zur Abtastrichtung des Laserstrahls (L) verläuft.

10. System nach Anspruch 8, bei dem die Wärmeerzeugungseinrichtung ein Heizmaterial (α) aufweist, welches im geschmolzenen Zustand in einem Gehäuse (93) aufgenommen ist, welches in Berührung mit dem wärmeempfindlichen Aufzeichnungsmedium (Sd) gehalten wird, und eine Temperatursteuerung (99) vorgesehen ist, um das Heizmaterial (α) auf einer einem geschmolzenen Zustand entsprechenden Temperatur zu halten, bei der das Heizmaterial (α) von einem festen in einen flüssigen Zustand übergeht.

11. System nach Anspruch 8, bei dem die Wärmeerzeugungseinrichtung aufweist: ein Heizmaterial (β), welches in einem verdampften Zustand innerhalb eines Gehäuses (103) aufgenommen ist, welches in Berührung mit dem wärmeempfindlichen Aufzeichnungsmedium (Sd) gehalten wird, und eine Temperatursteuerung (99) vorgesehen ist, die das Heizmaterial (β) auf einer dem Verdampfungszustand entsprechenden Temperatur hält, bei der das Heizmaterial (β) von einem flüssigen in einen gasförmigen Zustand wechselt.

12. System nach Anspruch 1, bei dem die Vorheizeinrichtung eine Wärmeerzeugungseinrichtung aufweist, um die gesamte Oberfläche des wärmeempfindlichen Aufzeichnungsmediums in einem Zustand zu erwärmen, in welchem die gesamte Oberfläche sich nicht in Berührung mit der Wärmeerzeugungseinrichtung befindet.

13. System nach Anspruch 1, bei dem die Vorheizeinrichtung eine Wärmeerzeugungseinrichtung aufweist, um zumindest einen Abschnitt des wärmeempfindlichen Aufzeichnungsmediums zu erwärmen, wobei dieser Abschnitt sich in der Nähe einer Stelle befindet, in der das wärmeempfindliche Aufzeichnungsmedium mit dem Laserstrahl in einem Zustand abgetastet wird, in welchem der Abschnitt sich nicht in Berührung mit der Wärmeerzeugungseinrichtung befindet.

14. System nach Anspruch 13, bei dem die Wärmeerzeugungseinrichtung ein Infrarotstrahlung emittierender Vorheizer ist.

15. System nach Anspruch 14, bei dem der Vorheizer von einem wärmeisolierenden Gehäuse umgeben ist.

16. System nach Anspruch 13, bei dem die Heizstrahlgeneratoreinrichtung mit einem umgebenden Gehäuse ausgestattet ist und die Wärmeerzeugungseinrichtung einen Heizer aufweist, der an einem Teil des Gehäuses befestigt ist.

17. System nach Anspruch 13, bei dem die Wärmeerzeugungseinrichtung eine Wärmplatte (90) zum Abstrahlen von Infrarotstrahlung ist.

18. System nach Anspruch 13, bei dem die Wärmeerzeugungseinrichtung eine Hochfrequenz-Induktionsspule (92) ist.

19. System nach Anspruch 13, bei dem die Wärmeerzeugungseinrichtung eine Hochfrequenz-Induktionselektrode ist.

20. System nach Anspruch 13, bei dem die Vorheizeinrichtung ein Schlitzglied (94) aufweist, welches sich zwischen der Wärmeerzeugungseinrichtung und dem wärmeempfindlichen Aufzeichnungsmedium befindet, um die Bestrahlungszone für seitens der Wärmeerzeugungseinrichtung auf das wärmeempfindliche Aufzeichnungsmedium emittierte Wärme zu beschränken auf denjenigen Abschnitt des wärmeempfindlichen Aufzeichnungsmediums, der sich in der Nähe der Abtastposition des Laserstrahls befindet.

21. System nach Anspruch 13, bei dem die Vorheizeinrichtung eine Lichtquelle (102) zum Emittieren von Infrarotstrahlung (M) einschließlich solcher Wellenlängen aufweist, die von Infrarot-absorbierenden Farbstoffen absorbiert werden, die in dem wärmeempfindlichen Aufzeichnungsmedium enthalten sind, außerdem Lichtsammelmittel (106, 108, 120, 122) zum Konzentrieren zumindest von Infrarotstrahlung der genannten Wellenlängen auf das wärmeempfindliche Aufzeichnungsmedium.

22. System nach Anspruch 21, bei dem die Lichtquelle und die Lichtsammelmittel eine Punktlichtquelle (85) bzw. eine Zylinderlinse (83) aufweisen, ferner eine Lichteinleiteinrichtung (83) zum Einleiten von seitens der Lichtquelle emittierter punktförmiger Infrarotstrahlung in die Zylinderlinse in Form linearer Infrarotstrahlung, wobei sich die Einrichtung zwischen der Lichtquelle und den Lichtsammelmitteln befindet.

23. System nach Anspruch 1, bei dem die Vorheizeinrichtung mehrere Wärmeerzeugungseinrichtungen enthält, um das wärmeempfindliche Aufzeichnungsmedium zu erwärmen, wobei einige der Wärmeerzeugungseinrichtungen sich in Berührung mit dem wärmeempfindlichen Aufzeichnungsmedium befinden und einige der Wärmeerzeugungseinrichtungen sich nicht in Berührung mit dem wärmeempfindlichen Aufzeichnungsmedium befinden.

24. System nach Anspruch 23, bei dem die Wärmeerzeugungseinrichtung aufweist: eine Kombination von Berührungsheizabschnitten, die der stromaufwärtigen bzw. stromabwärtigen Seite des wärmeempfindlichen Aufzeichnungsmediums entsprechen, eine Kombination des Berührungsheizabschnitts entsprechend der stromaufwärtigen Seite und eines kontaktlosen Heizabschnitts entsprechend der stromabwärtigen Seite des Mediums, oder eine Kombination eines berührungslosen Heizabschnitts entsprechend der stromaufwärtigen Seite und des Berührungsheizabschnitts entsprechend der stromabwärtigen Seite des Mediums.

25. System nach Anspruch 23, bei dem die Wärmeerzeugungseinrichtung derart aufgebaut ist, daß das wärmeempfindliche Aufzeichnungsmedium erwärmt wird durch Energie, die von einem stromaufwärtigen Wärmeerzeugungsabschnitt des wärmeempfindlichen Aufzeichnungsmediums erzeugt wird, wobei diese Energie größer ist als diejenige, die von einem stromabwärtigen Wärmeerzeugungsabschnitt erzeugt wird.

26. System nach Anspruch 1, bei dem die Vorheizeinrichtung aufweist: eine Vorheizstrahlgeneratoreinrichtung zum Bestrahlen eines Abschnitts des wärmeempfindlichen Aufzeichnungsmediums mit einem weiteren Laserstrahl, wobei dieser Abschnitt sich in der Nähe derjenigen Stelle befindet, an der das wärmeempfindliche Aufzeichnungsmedium mit dem Laserstrahl abgetastet wird, welcher von der Heizstrahlgeneratoreinrichtung emittiert wird, und zum Vorerwärmen des wärmeempfindlichen Aufzeichnungsmediums auf eine vorbestimmte Vorheiztemperatur dient.

27. System nach Anspruch 1, bei dem das wärmeempfindliche Aufzeichnungsmedium eine Wärmeabsorptionsschicht (48) zum Absorbieren von Vorwärme aufweist, die von der Vorheizeinrichtung erzeugt wird.

28. System nach Anspruch 1, bei dem die Vorheizeinrichtung aufweist: eine Wärmeerzeugungseinrichtung zum Erwärmen des wärmeempfindlichen Aufzeichnungsmediums, eine Temperaturdetektiereinrichtung zum Feststellen einer Vorerwärmungstemperatur des wärmeempfindlichen Aufzeichnungsmediums, und eine Temperatursteuereinrichtung zum Steuern der Wärmeerzeugungseinrichtung in der Weise, daß die Vorerwärmungstemperatur, die von der Temperaturdetektiereinrichtung festgestellt wird, auf eine vorbestimmte Temperatur eingestellt wird.

29. System nach Anspruch 28, bei dem die Temperaturdetektiereinrichtung aufweist: eine erste Temperaturdetektiereinrichtung (70) zum Fest-stellen der Temperatur in dem Thermoaufzeichnungssystem, und eine zweite Temperaturdetektiereinrichtung (71) zum Nachweisen der Temperatur eines Aufzeichnungsabschnitts des wärmeempfindlichen Aufzeichnungsmediums.

30. Thermoaufzeichnungssystem nach Anspruch 1, bei dem die Vorheizeinrichtung aufweist: eine Wärmeerzeugungseinrichtung zum Erwärmen des wärmeempfindlichen Aufzeichnungsmediums, einen Vorheiz-Farbentwicklungsabschnitt (84), der in dem wärmeempfindlichen Aufzeichnungsmedium gebildet ist und dazu dient, Farbe mit einer Dichte zu entwickeln, die einer Vorheiztemperatur entspricht, die seitens der Wärmeerzeugungseinrichtung aufgebracht wird, ein Densitometer (86) zum Feststellen der Dichte des Vorheiz-Farbentwicklungsabschnitts, und eine Temperatursteuereinrichtung (88) zum Steuern der Wärmeerzeugungseinrichtung derart, daß die von dem Densitometer festgestellte Dichte auf eine vorbestimmte Dichte eingestellt wird.

31. System nach Anspruch 30, bei dem der Vorheiz-Farbentwicklungsabschnitt ein sich von einer Bildaufzeichnungszone des wärmeempfindlichen Aufzeichnungsmediums unterscheidender Abschnitt ist.

32. System nach Anspruch 30, bei dem der Vorheiz-Farbentwicklungsabschnitt ein wärmeempfindliches Aufzeichnungsmedium aufweist, welches Farbe bei einer vorbestimmten Temperatur oder darüber entwickelt und die Farbe bei der vorbestimmten Temperatur oder unterhalb von dieser verliert.

33. System nach Anspruch 1, weiterhin umfassend:
(i) ein Schlitzglied mit einer Öffnung, wobei die Vorheizeinrichtung eine Wärmeerzeugungseinrichtung zum Erwärmen der wärmeempfindlichen Aufzeichnungseinrichtung durch die Öffnung hindurch aufweist;
(ii) einen Vorheiz-Farbentwicklungsabschnitt, der in dem wärmeempfindlichen Aufzeichnungsmedium gebildet ist und dazu dient, Farbe mit einer Dichte zu entwickeln, die einer seitens der Wärmeerzeugungseinrichtung aufgebrachten Vorheiztemperatur entspricht;
(iii) eine Dichtedetektiereinrichtung zum Ermitteln der Dichte des Vorheiz-Farbentwicklungsabschnitts; und
(iv) eine Steuereinrichtung zum Steuern der Breite der Öffnung derart, daß die von der Dichtedetektiereinrichtung festgestellte Dichte auf eine vorbestimmte Dichte eingestellt wird.

34. System (150) nach Anspruch 1, umfassend eine Drehtrommel (152), wobei das wärmeempfindliche Aufzeichnungsmedium (Sd) an einer äußeren Umfangsfläche der Trommel gelagert ist und die Vorheizeinrichtung sowie die Heizstrahlgeneratoreinrichtung (154) relativ zueinander entlang der Richtung parallel zur Drehachse der Trommel bewegt werden.

## Revendications

1. Système d'enregistrement thermique comprenant :
(i) un support d'enregistrement thermosensible (S) qui développe une couleur à une densité correspondant à l'énergie de chaleur appliquée;
(ii) un moyen de préchauffage (30, 26) pour préchauffer ledit support d'enregistrement thermosensible (S) jusqu'à une température prédéterminée inférieure à une température de développement de couleur prédéterminée ; et
(iii) un moyen de génération de faisceau chauffant (12) pour balayer ledit support d'enregistrement thermosensible (S) à l'aide d'un faisceau laser (L) de manière à chauffer ledit support d'enregistrement thermosensible (S) jusqu'à ladite température de développement de couleur prédéterminée,
caractérisé en ce que ledit support d'enregistrement comprend une couche thermosensible formée sur un support (36) en prévoyant des microcapsules contenant des colorants leuco, un développeur et des colorants absorbant la lumière dans une couche de revêtement puis en appliquant ladite couche de revêtement sur ledit support (36).

2. Système d'enregistrement thermique selon la revendication 1, dans lequel ledit moyen de génération de faisceau chauffant est commandé de telle sorte qu'une image soit enregistrée sur ledit support d'enregistrement thermosensible (S) sous la forme de multiples teintes.

3. Système d'enregistrement thermique selon la revendication 1, dans lequel ladite température prédéterminée est entre 40°C et 275°C.

4. Système d'enregistrement thermique selon la revendication 1, dans lequel ledit moyen de préchauffage réalise un préchauffage pendant 30 secondes ou moins.

5. Système d'enregistrement thermique selon la revendication 1, dans lequel ledit moyen de préchauffage comprend une couche génératrice de chaleur conductrice (38) formée dans ledit support d'enregistrement thermosensible (S) et un circuit d'application de courant (30) pour appliquer un courant à ladite couche génératrice de chaleur conductrice (38) de manière à amener ladite couche génératrice de chaleur conductrice (38) à ladite température prédéterminée.

6. Système d'enregistrement thermique selon la revendication 5, dans lequel ledit circuit d'application de courant (30) applique le courant à ladite couche génératrice de chaleur conductrice (38) par l'intermédiaire de deux électrodes (26a, 26b) maintenues en contact avec deux points de celle-ci espacés l'un de l'autre suivant la direction de balayage du faisceau laser.

7. Système d'enregistrement thermique (130) selon la revendication 5, dans lequel ledit support d'enregistrement thermosensible (Sg) comprend une pluralité de premières (134) et de secondes (138) lignes d'électrode parallèles agencées suivant respectivement des directions de balayage principal et de balayage auxiliaire, lesdites premières et secondes lignes d'électrode parallèles (134, 138) étant disposées selon une relation de face à face, ladite couche génératrice de chaleur conductrice (136) étant interposée entre, et ledit circuit d'application de courant (30) comprend un moyen de sélection de premières électrodes (144, 140) pour sélectionner une ligne d'électrode souhaitée parmi ladite pluralité de premières lignes d'électrode parallèles (134), un second moyen de sélection d'électrode (144, 142) pour sélectionner une ligne d'électrode souhaitée parmi ladite pluralité de secondes lignes d'électrode parallèles (138) et un moyen d'application de courant (30) pour appliquer un courant auxdits premier et second moyens de sélection d'électrode.

8. Système d'enregistrement thermique selon la revendication 1, dans lequel ledit moyen de préchauffage comporte des moyens de génération de chaleur pour chauffer au moins une partie dudit support d'enregistrement thermosensible (S), ladite partie étant située à proximité d'une position où ledit support d'enregistrement thermosensible est balayé à l'aide du faisceau laser (L), dans un état dans lequel ladite partie est en contact avec lesdits moyens de génération de chaleur.

9. Système d'enregistrement thermique selon la revendication 8, dans lequel lesdits moyens de génération de chaleur comprennent un rouleau thermique (46) comportant un arbre sensiblement parallèle à la direction de balayage du faisceau laser (L).

10. Système d'enregistrement thermique selon la revendication 8, dans lequel lesdits moyens de génération de chaleur comprennent un matériau chauffant (α) reçu dans un état fondu à l'intérieur d'un boîtier (93) maintenu en contact avec ledit support d'enregistrement thermosensible (Sd), et un contrôleur de température (99) pour maintenir ledit matériau chauffant (α) à une température d'état fondu à laquelle ledit matériau chauffant (α) passe de l'état solide à l'état liquide.

11. Système d'enregistrement thermique selon la revendication 8, dans lequel lesdits moyens de génération de chaleur comprennent un matériau chauffant (β) reçu dans un état vaporisé à l'intérieur d'un boîtier (103) qui est maintenu en contact avec ledit support d'enregistrement thermosensible (Sd), et un contrôleur de température (99) pour maintenir ledit matériau chauffant (β) à une température d'état de vaporisation à laquelle ledit matériau chauffant (β) passe de l'état liquide à l'état gazeux.

12. Système d'enregistrement thermique selon la revendication 1, dans lequel ledit moyen de préchauffage comporte des moyens de génération de chaleur pour chauffer la totalité de la surface dudit support d'enregistrement thermosensible dans un état dans lequel ladite totalité de la surface n'est pas en contact avec lesdits moyens de génération de chaleur.

13. Système d'enregistrement thermique selon la revendication 1, dans lequel ledit moyen de préchauffage comporte des moyens de génération de chaleur pour chauffer au moins une partie dudit support d'enregistrement thermosensible, ladite partie étant située à proximité d'une position où ledit support d'enregistrement thermosensible est balayé à l'aide du faisceau laser, dans un état dans lequel ladite partie n'est pas en contact avec lesdits moyens de génération de chaleur.

14. Système d'enregistrement thermique selon la revendication 13, dans lequel lesdits moyens de génération de chaleur sont un dispositif de préchauffage pour émettre un rayonnement infrarouge.

15. Système d'enregistrement thermique selon la revendication 14, dans lequel ledit dispositif de préchauffage est entouré par un boîtier isolé thermiquement.

16. Système d'enregistrement thermique selon la revendication 13, dans lequel ledit moyen de génération de faisceau chauffant est muni d'un boîtier formant enceinte et lesdits moyens de génération de chaleur comprennent un dispositif de chauffage fixé à une partie dudit boîtier.

17. Système d'enregistrement thermique selon la revendication 13, dans lequel lesdits moyens de génération de chaleur sont une plaque thermique (90) pour émettre un rayonnement infrarouge.

18. Système d'enregistrement thermique selon la revendication 13, dans lequel lesdits moyens de génération de chaleur sont une bobine à induction haute fréquence (92).

19. Système d'enregistrement thermique selon la revendication 13, dans lequel lesdits moyens de génération de chaleur sont une électrode à induction haute fréquence.

20. Système d'enregistrement thermique selon la revendication 13, dans lequel ledit moyen de préchauffage comporte un élément à fente (98) disposé entre lesdits moyens de génération de chaleur et ledit support d'enregistrement thermosensible pour limiter la région d'irradiation de la chaleur émise depuis lesdits moyens de génération de chaleur sur ledit support d'enregistrement thermosensible à la partie dudit support d'enregistrement thermosensible qui est située à proximité de ladite position de balayage du faisceau laser.

21. Système d'enregistrement thermique selon la revendication 13, dans lequel ledit moyen de préchauffage comporte une source de lumière (102) pour émettre un rayonnement infrarouge (M) incluant des longueurs d'onde absorbées par des colorants absorbeurs d'infrarouges contenus dans ledit support d'enregistrement thermosensible, et un moyen de condensation de lumière (106, 108, 120, 122) pour concentrer au moins un rayonnement infrarouge desdites longueurs d'onde sur ledit support d'enregistrement thermosensible.

22. Système d'enregistrement thermique selon la revendication 21, dans lequel ladite source de lumière et ledit moyen de condensation de lumière sont respectivement une source de lumière ponctuelle (85) et une lentille cylindrique (83), et un moyen d'introduction de lumière (87) pour introduire un rayonnement infrarouge de forme ponctuelle émis depuis ladite source de lumière dans ladite lentille cylindrique en tant que rayonnement infrarouge linéaire est disposé entre ladite source de lumière et ledit moyen de condensation de lumière.

23. Système d'enregistrement thermique selon la revendication 1, dans lequel ledit moyen de préchauffage inclut une pluralité de moyens de génération de chaleur pour chauffer ledit support d'enregistrement thermosensible où certains desdits moyens de génération de chaleur sont en contact avec ledit support d'enregistrement thermosensible et certains desdits moyens de génération de chaleur ne sont pas en contact avec ledit support d'enregistrement thermosensible.

24. Système d'enregistrement thermique selon la revendication 23, dans lequel lesdits moyens de génération de chaleur comprennent l'une quelconque d'une combinaison de parties chauffantes par contact correspondant respectivement aux côtés amont et aval dudit support d'enregistrement thermosensible, d'une combinaison de la partie chauffante par contact correspondant à son côté amont et d'une partie chauffante sans contact correspondant à son côté aval, et d'une combinaison d'une partie chauffante sans contact correspondant à son côté amont et de la partie chauffante par contact correspondant à son côté aval.

25. Système d'enregistrement thermique selon la revendication 23, dans lequel lesdits moyens de génération de chaleur sont construits de manière à chauffer ledit support d'enregistrement thermosensible par l'énergie générée depuis une partie de génération de chaleur de côté amont dudit support d'enregistrement thermosensible, cette énergie étant supérieure à celle générée par sa partie de génération de chaleur de côté aval.

26. Système d'enregistrement thermique selon la revendication 1, dans lequel ledit moyen de préchauffage comprend un moyen de génération de faisceau de préchauffage pour irradier une partie dudit support d'enregistrement thermosensible avec un autre faisceau laser, ladite partie étant située près de la position où ledit support d'enregistrement thermosensible est balayé avec le faisceau laser émis depuis ledit moyen de génération de faisceau de chauffage et pour préchauffer ledit support d'enregistrement thermosensible jusqu'à une température de préchauffage prédéterminée.

27. Système d'enregistrement thermique selon la revendication 1, dans lequel ledit support d'enregistrement thermosensible comporte une couche d'absorption de chaleur (48) pour absorber la chaleur de préchauffage produite par ledit moyen de préchauffage.

28. Système d'enregistrement thermique selon la revendication 1, dans lequel ledit moyen de préchauffage comprend des moyens de génération de chaleur pour chauffer ledit support d'enregistrement thermosensible, un moyen de détection de température pour détecter une température de préchauffage dudit support d'enregistrement thermosensible et un moyen de commande de température pour commander lesdits moyens de génération de chaleur de manière à établir la température de préchauffage détectée par ledit moyen de détection de température à une température prédéterminée.

29. Système d'enregistrement thermique selon la revendication 28, dans lequel ledit moyen de détection de température comprend un premier moyen de détection de température (70) pour détecter la température dans ledit système d'enregistrement thermique et un second moyen de détection de température (71) pour détecter la température d'une partie d'enregistrement dudit support d'enregistrement thermosensible.

30. Système d'enregistrement thermique selon la revendication 1, dans lequel ledit moyen de préchauffage comprend des moyens de génération de chaleur pour chauffer ledit moyen d'enregistrement thermosensible, une partie de développement de couleur du type préchauffage (84) formée dans ledit support d'enregistrement thermosensible et pour développer une couleur à une densité correspondant à une température de préchauffage appliquée par lesdits moyens de génération de chaleur, un densitomètre (86) pour détecter la densité de ladite partie de développement de couleur du type préchauffage et un moyen de commande de température (88) pour commander lesdits moyens de génération de chaleur de manière à établir la densité détectée par ledit densitomètre à une densité prédéterminée.

31. Système d'enregistrement thermique selon la revendication 30, dans lequel ladite partie de développement de couleur du type préchauffage est prévue au niveau d'une partie autre qu'une région d'enregistrement d'image dudit support d'enregistrement thermosensible.

32. Système d'enregistrement thermique selon la revendication 30, dans lequel ladite partie de développement de couleur du type préchauffage comprend un support d'enregistrement thermosensible qui développe une couleur à une température prédéterminée ou au-dessus et qui perd la couleur à la température prédéterminée ou au-dessous.

33. Système d'enregistrement thermique selon la revendication 1, comprenant en outre :
(i) un élément à fente comportant une ouverture, où ledit moyen de préchauffage comprend des moyens de génération de chaleur pour chauffer ledit moyen d'enregistrement thermosensible au travers de ladite ouverture ;
(ii) une partie de développement de couleur du type préchauffage formée dans ledit support d'enregistrement thermosensible et utilisée pour développer une couleur à une densité correspondant à une température de préchauffage appliquée par lesdits moyens de génération de chaleur ;
(iii) un moyen de détection de densité pour détecter la densité de ladite partie de développement de couleur du type préchauffage ; et
(iv) un moyen de commande pour commander la largeur de ladite ouverture de manière à établir la densité détectée par ledit moyen de détection de densité à une densité prédéterminée.

34. Système d'enregistrement thermique (150) selon la revendication 1, comprenant en outre un tambour tournant (152), dans lequel ledit support d'enregistrement thermosensible (Sd) est monté sur la surface périphérique externe dudit tambour et ledit moyen de préchauffage et lesdits moyens de génération de faisceau chauffant (154) sont déplacés les uns par rapport aux autres suivant la direction parallèle à l'axe de rotation dudit tambour.
